# EUROPEAN PATENT APPLICATION

(11) **EP 4 841 995 A1**
(43) Date of publication of application: **18.11.2026**
(21) Application number: 24924093.8
(22) Date of filing: 31.07.2024
(51) Int. Cl.: H04N 21/422, H04N 21/466, H04N 21/475, G10L 17/22, G10L 15/26

(54) **ELECTRONIC DEVICE, SERVER, AND SYSTEM COMPRISING SAME**

(30) Priority: 08.02.2024 KR 20240019974
(71) Applicant: LG Electronics Inc., Yeongdeungpo-gu Seoul 07336 (KR)
(72) Inventor: LEE, Seonghak, Seoul 06772 (KR); CHOI, Gowoon, Seoul 06772 (KR); LEE, Sangseok, Seoul 06772 (KR); KIM, Taejoon, Seoul 06772 (KR); PARK, Seunghye, Seoul 06772 (KR); PARK, Jeongyong, Seoul 06772 (KR); LEE, Jungjae, Seoul 06772 (KR)
(74) Representative: Vossius & Partner Patentanwälte Rechtsanwälte mbB
(86) International application number: PCT/KR2024/011228
(87) International publication number: WO 2025/170132

(57) **Abstract**

An electronic device includes a display, an external device interface that communicates with a remote control device, a network interface that communicates with a server, a user input interface that transmits a signal related to a user input, and a controller, and the controller displays a preset text related to registration of identification information while performing a process of registering the identification information related to speech for a user account logged in to the server, upon receiving a speech signal related to the preset text, transmits data including the speech signal to the server, completes the process of registering the identification information based on processing of the speech signal related to the preset text by the server, and interrupts the process of registering the identification information upon receiving a predetermined input related to speech recognition from the remote control device during the process of registering the identification information.

## Description

### [Technical Field]

The present disclosure relates to an electronic device, a server, and a system including the same, and more specifically, to an electronic device, a server, and a system including the same that utilize speech recognition technology.

### [Background Art]

With the recent development of technology, research on speech recognition technology for processing speech is being actively conducted. In particular, research on speech recognition technology, which began with smartphones, is being conducted widely in various fields related to user convenience, such as vehicles, as well as home appliances used at home and in offices.

Speech recognition technology is commonly used when a user controls an electronic device using his or her voice. For example, when a user utters a command to control an electronic device, the electronic device may directly recognize and process user's speech and operate according to the command related to the speech, or may send the speech to a server that processes speech and then operate according to a command related to the speech received from the server.

Meanwhile, services or functions provided through electronic devices are becoming increasingly diverse. Additionally, users register accounts for various services and then use the services by logging in with the registered account. In this case, service providers use user information managed for each account to provide optimal functions or information tailored to the user.

Conventionally, when attempting to log in to use a service, a user needs to directly input account information, for example, an identification (ID) and/or a password of the account. However, it is inconvenient for a user to input account information one by one into various services. Additionally, if a user remains logged in to eliminate the inconvenience of inputting account information, security problems such as access to the user's account information by others may occur. Additionally, when multiple users use one electronic device together, there is a problem that multiple users need to input their account information and log in each time they use a service.

### [Disclosure]

### [Technical Problem]

An object of the present disclosure is to solve the above-described problems and other problems.

Another object of the present disclosure is to provide an electronic device, a server, and a system including the same capable of registering identification information on a user voice in a user account.

Still another object of the present disclosure is to provide an electronic device, a server, and a system including the same capable of identifying a user based on a user voice.

Still another object of the present disclosure is to provide an electronic device, a server, and a system including the same capable of logging in with a user account identified based on user voice.

Still another object of the present disclosure is to provide an electronic device, a server, and a system including the same capable of maintaining the continuity of identification information on a user who has previously attempted registration in a process of registering identification information on user voice to a user account.

### [Technical Solution]

In order to achieve the above objects, an electronic device according to one embodiment of the present disclosure includes: a display, an external device interface configured to communicate with a remote control device, a network interface configured to communicate with a server, a user input interface configured to transmit a signal related to a user input, and a controller, wherein the controller is configured to display a preset text related to registration of identification information through the display while performing a process of registering the identification information related to speech for a user account logged in to the server, upon receiving a speech signal related to the preset text through the user input interface, transmit data including the speech signal to the server, complete the process of registering the identification information based on processing of the speech signal related to the preset text by the server, and interrupt the process of registering the identification information upon receiving a predetermined input related to speech recognition from the remote control device during the process of registering the identification information.

In order to achieve the above objects, a server according to one embodiment of the present disclosure includes: a communication part configured to communicate with an electronic device, a database, and a controller, wherein the controller is configured to convert a speech signal included in data received from the electronic device into text while performing a process of registering identification information related to speech for a user account logged in to the server, generate identification information related to the speech signal based on the converted text being related to preset text related to registration of the identification information, map the generated identification information to user identification information related to the user account and store the mapped information in the database, and maintain or delete the identification information mapped to the user identification information upon receiving a notification regarding interruption of the process of registering the identification information from the electronic device during the process of registering the identification information.

In order to achieve the above objects, a system according to one embodiment of the present disclosure includes: an electronic device; and a server, wherein the electronic device is configured to display a preset text related to registration of identification information while performing a process of registering the identification information related to speech for a user account logged in to the server, upon receiving a speech signal related to the preset text, transmit data including the speech signal to the server, complete the process of registering the identification information based on processing of the speech signal related to the preset text by the server, and stop the process of registering the identification information upon receiving a predetermined input related to speech recognition from a remote control device during the process of registering the identification information, and the server is configured to convert the speech signal included in the data received from the electronic device into text, generate identification information related to the speech signal based on the converted text and the preset text being related to each other, map the generated identification information to user identification information related to the user account and store the mapped information in a database, and maintain or delete the identification information mapped to the user identification information upon receiving a notification regarding interruption of the process of registering the identification information from the electronic device during the process of registering the identification information.

### [Advantageous Effects]

The advantages of the electronic device, server and the system including the same according to the present disclosure will now be described as follows.

According to at least one embodiment of the present disclosure, it is possible to register identification information on user voice in a user account.

According to at least one embodiment of the present disclosure, it is possible to identify a user based on user voice.

According to at least one embodiment of the present disclosure, it is possible to log in to an account of a user identified based on user voice.

According to at least one embodiment of the present disclosure, it is possible to maintain the continuity of identification information on a user who has previously attempted registration in a process of registering identification information on user voice to a user account.

Additional scopes of applicability of the present disclosure will become apparent from the detailed description given below. However, it should be understood that the detailed description and specific embodiments, such as preferred embodiments of the present disclosure, are given by way of illustration only, since various changes and modifications within the idea and scope of the present disclosure will become apparent to those skilled in the art from the detailed description.

### [Description of Drawings]

FIG. 1 is a diagram illustrating a system according to an embodiment of the present disclosure;
FIG. 2 is an internal block diagram of an electronic device of FIG. 1;
FIG. 3 is a diagram referenced in description of a server of FIG. 1;
FIG. 4 is a block diagram illustrating a configuration of a server according to an embodiment of the present disclosure;
FIG. 5 is a diagram illustrating an example of converting a speech signal into a power spectrum according to an embodiment of the present disclosure;
FIG. 6 is a block diagram illustrating the configuration of a controller for speech recognition and synthesis of an electronic device, according to an embodiment of the present disclosure;
FIG. 7 is a flowchart of a method of operating an electronic device according to an embodiment of the present disclosure;
FIG. 8 is a flowchart of a method of operating a system according to an embodiment of the present disclosure;
FIG. 9 to FIG. 16 are diagrams referenced in description of a process of registering identification information on user voice in a user account according to an embodiment of the present disclosure;
FIG. 17A and FIG. 17B are flowcharts of a method of operating an electronic device according to another embodiment of the present disclosure; and
FIG. 18 to FIG. 20 are flowcharts of methods of operating a system according to various embodiments of the present disclosure.

### [Mode for Invention]

Hereinafter, the present disclosure will be described in detail with reference to the attached drawings. In the drawings, parts not related to description are omitted in order to clearly and briefly describe the present disclosure, and identical or extremely similar parts are denoted by the same reference numerals throughout the specification.

The suffixes "module" and "part" for components used in the following description are simply given in consideration of the ease of writing this specification and do not have any particularly important meaning or role. Accordingly, the terms "module" and "part" may be used interchangeably.

In the present disclosure, it will be further understood that the term "comprise" or "include" specifies the presence of a stated feature, figure, step, operation, component, part or combination thereof, but does not preclude the presence or addition of one or more other features, figures, steps, operations, components, or combinations thereof.

Further, in this specification, the terms "first" and/or "second" are used to describe various components, but such components are not limited by these terms. The terms are used to discriminate one component from another component.

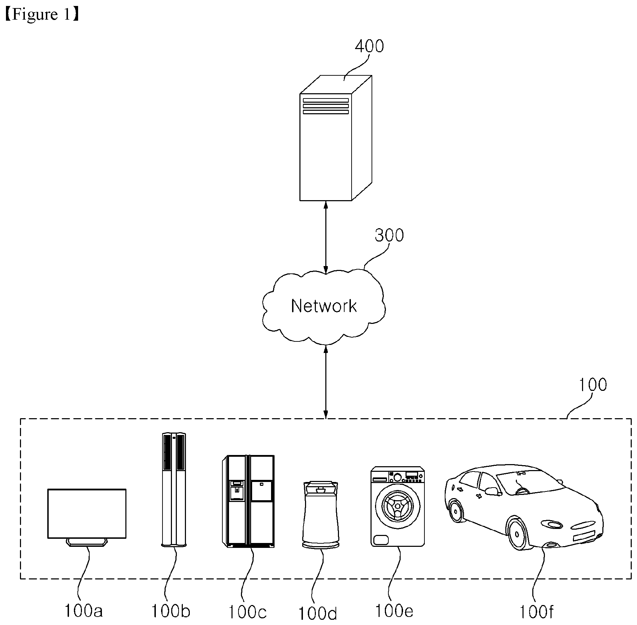

FIG. 1 is a diagram illustrating a system according to various embodiments of the present disclosure.

Referring to FIG. 1, the system 10 may include an electronic device 100 and/or a server 400.

The electronic device 100 may transmit/receive data to/from at least one server 400. For example, the electronic device 100 may transmit/receive data to/from the at least one server 400 via a network 300 such as the Internet.

According to an embodiment, the at least one server 400 may include a server that performs speech recognition, a server that processes data using a super-giant artificial intelligence model, a server that provides content, and the like.

The electronic device 100 may include an image display device 100a, an air conditioner 100b, a refrigerator 100c, an air purifier 100d, a washing machine 100e, a vehicle 100f, and the like. Although the electronic device 100 is an image display device 100a in the present disclosure, the present disclosure is not limited thereto.

The image display device 100a may be a device that processes and outputs images. The image display device 100a is not particularly limited as long as it can output a screen related to video signals, such as a TV, a laptop computer, or a monitor.

The image display device 100a may receive a broadcast signal, process the same, and output a processed broadcast image. When the image display device 100a receives a broadcast signal, the image display device 100a may correspond to a broadcast reception device.

The image display device 100a may receive broadcast signals wirelessly through an antenna, or may receive broadcast signals through a cable. For example, the image display device 100a may receive terrestrial broadcast signals, satellite broadcast signals, cable broadcast signals, and Internet protocol Television (IPTV) broadcast signals.

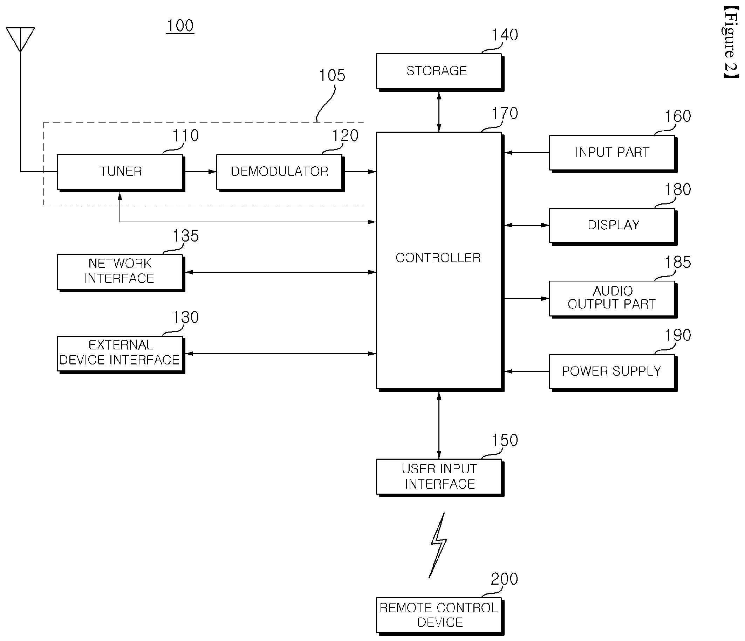

FIG. 2 is an internal block diagram of the electronic device of FIG. 1.

Referring to FIG. 2, the electronic device 100 may include a broadcast receiver 105, an external device interface 130, a network interface 135, a storage 140, a user input interface 150, an input part 160, a controller 170, a display 180, an audio output part 185, and/or a power supply 190.

The broadcast receiver 105 may include a tuner 110 and a demodulator 120.

Meanwhile, the electronic device 100 may include only the broadcast receiver 105 and the external device interface 130 among the broadcast receiver 105, the external device interface 130, and the network interface 135. That is, the electronic device 100 may not include the network interface 135.

The tuner 110 may select a broadcast signal related to a channel selected by a user or broadcast signals of all previously stored channels among broadcast signals received through an antenna (not shown) or a cable (not shown). The tuner 110 may convert the selected broadcast signals into intermediate frequency signals or baseband video or audio signals.

For example, if a selected broadcast signal is a digital broadcast signal, the tuner 110 may convert the selected broadcast signal into a digital IF signal (DIF), and if the selected broadcast signal is an analog broadcast signal, convert the same into an analog baseband video or audio signal (CVBS/SIF). That is, the tuner 110 may process digital broadcast signals or analog broadcast signals. The analog base band video or audio signal (CVBS/SIF) output from the tuner 110 may be directly input to the controller 170.

Meanwhile, the tuner 110 may sequentially select broadcast signals of all of stored broadcast channels through a channel memory function among received broadcast signals and convert the same into intermediate frequency signals or baseband video or audio signals.

The tuner 110 may include a plurality of tuners in order to receive broadcast signals of a plurality of channels. Alternatively, a single tuner that simultaneously receives broadcast signals of a plurality of channels may also be adopted.

The demodulator 120 may receive a digital IF signal (DIF) converted by the tuner 110 and perform a demodulation operation.

The demodulator 120 may output a stream signal TS after performing demodulation and channel decoding. Here, the stream signal may be a multiplexed video signal, audio signal, or data signal.

The stream signal output from the demodulator 120 may be input to the controller 170. After performing demultiplexing and video/audio signal processing, the controller 170 may output video through the display 180 and output audio through the audio output part 185.

The external device interface 130 may transmit/receive data to/from a connected external device. To this end, the external device interface 130 may include an A/V input/output part (not shown).

The external device interface 130 may be connected to external devices such as a digital versatile disc (DVD) player, a Blu-ray player, a game console, a camera, a camcorder, a computer (laptop), a set-top box, and the like in wired/wireless manners, and may also perform input/output operations with respect to external devices.

In addition, the external device interface 130 may establish a communication network with respect to various remote control devices 200 to receive control signals related to the operation of the electronic device 100 from the remote control devices 200 or to transmit data related to the operation of the electronic device 100 to the remote control devices 200.

The A/V input/output part may receive video and audio signals from an external device. For example, the A/V input/output part may include an Ethernet terminal, a USB terminal, a composite video banking Sync (CVBS) terminal, a component terminal, an S-video terminal (analog), a digital visual interface (DVI) terminal, a high definition multimedia interface (HDMI) terminal, a mobile high-definition link (MHL) terminal, an RGB terminal, a D-SUB terminal, an IEEE 1394 terminal, an SPDIF terminal, a liquid HD terminal, and the like. Digital signals input through these terminals may be transmitted to the controller 170. Here, analog signals input through the CVBS terminal and the S-video terminal may be converted into digital signals through an analog-to-digital converter (not shown) and transmitted to the controller 170.

The external device interface 130 may include a wireless communication part (not shown) for short-distance wireless communication with other electronic devices. The external device interface 130 may exchange data with a neighboring mobile terminal through the wireless communication part. For example, the external device interface 130 may receive device information, executing application information, application images, and the like from the mobile terminal in a mirroring mode.

The external device interface 130 may perform short-range wireless communication using Bluetooth, radio frequency identification (RFID), infrared data association (IrDA), ultra-wideband (UWB), ZigBee, and the like.

The network interface 135 may provide an interface for connecting the electronic device 100 to a wired/wireless network including the Internet.

The network interface 135 may include a communication module (not shown) for connection to a wired/wireless network. For example, the network interface 135 may include a communication module for a wireless LAN (WLAN) (Wi-Fi), wireless broadband (WiBro), world interoperability for microwave access (WiMax), and high speed downlink packet access (HSDPA).

The network interface 135 may transmit/receive data to/from other users or other electronic devices through a connected network or another network linked to the connected network.

The network interface 135 may receive web content or data provided by content providers or network operators. That is, the network interface 135 may receive content such as movies, advertisements, games, VOD, and broadcasting and information related thereto provided from content providers or network providers through networks.

The network interface 135 may receive firmware update information and update files provided by network operators, and may transmit data to the Internet, content providers, or network operators.

The network interface 135 may select and receive a desired application from among applications open to the public through a network.

The storage 140 may store programs for processing and controlling each signal in the controller 170 and may store processed video, audio, or data signals. For example, the storage 140 may store application programs designed for the purpose of performing various tasks that may be processed by the controller 170 and selectively provide some of the stored application programs at the request of the controller 170.

Programs stored in the storage 140 are not particularly limited as long as they can be executed by the controller 170.

The storage 140 may execute a function of temporarily storing video, voice, or data signals received from an external device through the external device interface 130.

The storage 140 may store information on a predetermined broadcast channel through a channel memory function such as a channel map.

Although FIG. 2 illustrates an embodiment in which the storage 140 is provided separately from the controller 170, the scope of the present disclosure is not limited thereto, and the storage 140 may be included in the controller 170.

The storage 140 may include at least one of a volatile memory (e.g., a DRAM, an SRAM, an SDRAM, etc.) or a non-volatile memory (e.g., a flash memory, a hard disk drive (HDD), a solid-state drive (SSD), etc.). In various embodiments of the present disclosure, "storage" and "memory" may be used interchangeably.

The user input interface 150 may transmit a signal input by a user to the controller 170 or transmit a signal from the controller 170 to the user.

For example, the user input interface 150 may transmit/receives user input signals such as power on/off, channel selection, and screen settings to/from the remote control device 200, transmit user input signals input through local keys (not shown) such as a power key, a channel key, a volume key, and a setting key to the controller 170, transmit a user input signal input through a sensor (not shown) that senses a user's gesture to the controller 170, or transmit signals from the controller 170 to the sensor.

The input part 160 may be provided on one side of the main body of the electronic device 100. For example, the input part 160 may include a touch pad, physical buttons, and the like.

The input part 160 may receive various user commands related to the operation of the electronic device 100 and transmit control signals related to the input commands to the controller 170.

The input part 160 may include at least one microphone (not shown) and may receive a user voice through the microphone.

The controller 170 may include at least one processor and may control the overall operation of the electronic device 100 using the processor included therein. Here, the processor may be a general processor such as a central processing unit (CPU). Alternatively, the processor may be a dedicated device, such as ASIC, or another hardware-based processor.

The controller 170 may demultiplex streams input through the tuner 110, the demodulator 120, the external device interface 130, or the network interface 135, or process demultiplexed signals to generate and output signals for video or audio output.

The display 180 may convert a video signal, a data signal, an OSD signal, and a control signal processed by the controller 170 or a video signal, a data signal, and a control signal received from the external device interface 130 to generate driving signals.

The display 180 may include a display panel (not shown) having a plurality of pixels.

The plurality of pixels provided in the display panel may include RGB subpixels. Alternatively, the plurality of pixels provided in the display panel may include RGBW subpixels. The display 180 may convert a video signal, a data signal, an OSD signal, a control signal, etc. processed by the controller 170 to generate driving signals for the plurality of pixels.

The display 180 may be a plasma display panel (PDP), a liquid crystal display (LCD), an organic light emitting diode (OLED) display, or a flexible display, and may also be a 3D display. 3D displays 180 may be classified into a glasses-free type and a glasses type.

Meanwhile, the display 180 may be configured as a touch screen and used as an input device in addition to an output device.

The audio output part 185 receives the audio signal processed by the controller 170 and outputs the same as audio.

A video signal processed by the controller 170 may be input to the display 180 and displayed as an image related to the video signal. Additionally, the video signal processed by the controller 170 may be input to an external output device through the external device interface 130.

An audio signal processed by the controller 170 may be output as sound to the audio output part 185. Additionally, the audio signal processed by the controller 170 may be input to an external output device through the external device interface 130.

Although not illustrated in FIG. 2, the controller 170 may include a demultiplexer, an image processor, etc.

In addition, the controller 170 may control overall operations of the electronic device 100. For example, the controller 170 may control the tuner 110 to select (tune to) a broadcast related to a channel selected by the user or a previously stored channel.

Additionally, the controller 170 may control the electronic device 100 using a user command input through the user input interface 150 or an internal program.

Meanwhile, the controller 170 may control the display 180 to display an image. Here, the image displayed on the display 180 may be a still image or a video, and may be a 2D image or a 3D image.

Further, the controller 170 may cause a predetermined 2D object to be displayed in an image displayed on the display 180. For example, the object may be at least one of a connected web screen (newspaper, magazine, or the like), an electronic program guide (EPG), various menus, widgets, icons, a still image, a video, or text.

Meanwhile, the electronic device 100 may further include an imaging device (not shown). The imaging device may capture an image of the user. The imaging device may be implemented as a single camera, but the present disclosure is not limited thereto and the imaging device may also be implemented as a plurality of cameras. Meanwhile, the imaging device may be embedded in the electronic device 100 at the top of the display 180 or may be disposed separately. Image information captured by the imaging device may be input to the controller 170.

The controller 170 may recognize a location of the user based on images captured by the imaging device. For example, the controller 170 may ascertain the distance (z-axis coordinate) between the user and the electronic device 100. In addition, the controller 170 may ascertain the x-axis coordinate and y-axis coordinate in the display 180 related to the location of the user.

The controller 170 may detect a user's gesture based on images captured by the imaging device, each signal detected by a sensor, or a combination thereof.

The power supply 190 may supply corresponding power throughout the electronic device 100. In particular, the power supply 190 may supply power to the controller 170, which may be implemented in the form of a system on chip (SOC), the display 180 for displaying images, and the audio output part 185 for audio output.

Specifically, the power supply 190 may include a converter (not shown) that converts AC power to DC power and a DC/DC converter (not shown) that converts a DC power level.

The remote control device 200 may transmit user input to the user input interface 150. To this end, the remote control device 200 may use Bluetooth, radio frequency (RF) communication, infrared communication, ultra-wideband (UWB), ZigBee, and the like. Additionally, the remote control device 200 may receive video, audio, or data signals output from the user input interface 150 and display the same or output the same as audio through the remote control device 200.

The electronic device 100 described above may be a stationary or mobile digital broadcast receiver capable of receiving digital broadcasting.

Meanwhile, the block diagram of the electronic device 100 shown in FIG. 2 is merely a block diagram for an embodiment of the present disclosure, and components of the block diagram may be integrated, added, or omitted according to the specifications of the electronic device 100 that is actually implemented.

That is, two or more components may be combined into one component, or one component may be subdivided into two or more components as necessary. In addition, the function executed by each block is for describing an embodiment of the present disclosure, and the specific operation or device does not limit the scope of the present disclosure.

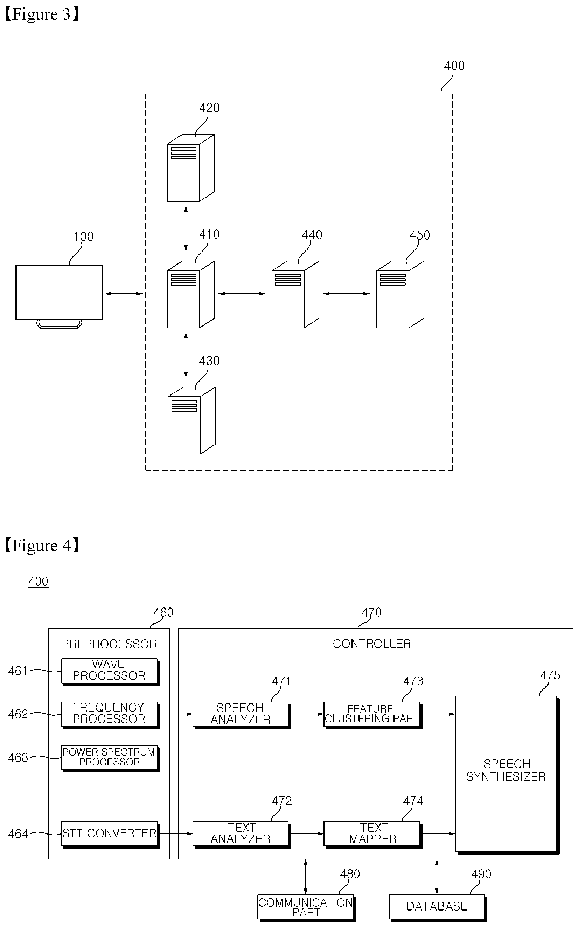

FIG. 3 is a diagram referenced in description of the server of FIG. 1.

Referring to FIG. 3, the server 400 may include a relay server 410, a speech-to-text (STT) server 420, a natural language processing (NLP) server 430, a user identification server 440, and/or an account server 450. Although the relay server 410, the STT server 420, the NLP server 430, the user identification server 440, and the account server 450 are distinguished from each other in the present disclosure, the present disclosure is not limited thereto. For example, two or more of the relay server 410, the STT server 420, the NLP server 430, the user identification server 440, and the account server 450 may be configured as one server.

The relay server 410 may communicate with the electronic device 100. The relay server 410 may transmit data between the STT server 420, the NLP server 430, the user identification server 440, and the electronic device 100. The relay server 410 may store at least some data transmitted between the STT server 420, the NLP server 430, the user identification server 440, and the electronic device 100.

The STT server 420 may receive audio data. The STT server 420 may convert the audio data into text data. The STT server 420 may transmit the text data to the electronic device 100 via the relay server 410. The STT server 420 may be called an automatic speech recognition (ASR) server.

The STT server 420 may increase the accuracy of speech-to-text conversion using a language model. A language model may refer to a model that may calculate the probability of a sentence or the probability of the next word appearing when previous words are provided. For example, the language model may include probabilistic language models such as Unigram model, Bigram model, and N-gram model. That is, the STT server 420 may determine whether text data has been appropriately converted from audio data, and accordingly, increase the accuracy of conversion to text data.

The NLP server 430 may receive text data. The NLP server 430 may perform intent analysis on the text data based on the received text data. The NLP server 430 may transmit intent analysis information indicating the result of intent analysis to the electronic device 100 via the relay server 410.

According to an embodiment, the NLP server 430 may generate intent analysis information by sequentially performing a morpheme analysis step, a syntax analysis step, a speech-act analysis step, a conversation processing step, and the like on text data. The morpheme analysis step is a step of classifying text data related to speech uttered by a user into morpheme units, which are the smallest units with meaning, and determining to what part of speech each classified morpheme corresponds. The syntax analysis step is a step of classifying text data into noun phrases, verb phrases, adjective phrases, and the like using the results of the morpheme analysis step and determining what kind of relationship is present between the classified phrases. Through the syntax analysis step, subjects, objects, and modifiers of speech uttered by a user may be determined. The speech-act analysis step is a step of analyzing the intention of speech uttered by a user using the results of the syntax analysis step. Specifically, the speech-act analysis step is a step of determining the intention of a sentence, such as whether a user is asking a question, making a request, or simply expressing an emotion. The conversation processing step is a step of determining whether to reply to user's utterance, respond thereto, or ask a question for additional information.

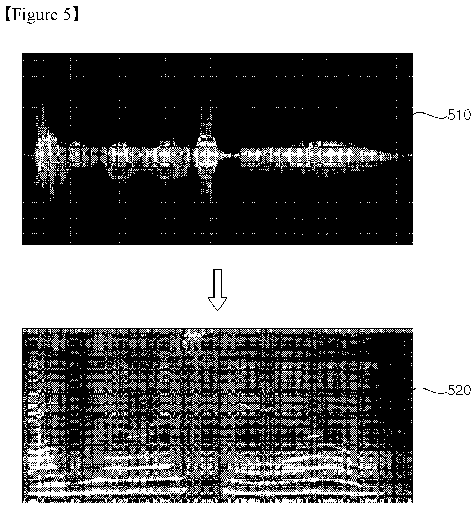

The user identification server 440 may receive audio data. The user identification server 440 may extract voice features based on the audio data. Here, the voice features may include the waveform of the voice, the frequency band of the voice, the power spectrum of the voice, and the like. Extraction of voice features will be described later with reference to FIG. 4 and FIG. 5.

The user identification server 440 may obtain a voice feature vector from the voice features. The user identification server 440 may obtain the voice feature vector from the voice features based on a linear predictive coefficient, cepstrum, Mel frequency cepstral coefficient (MFCC), and filter bank energy.

The user identification server 440 may determine a similarity between a plurality of feature vectors. The user identification server 440 may determine the similarity between the plurality of feature vectors using cosine similarity, Euclidean similarity, or the like. Although an example of calculating a similarity between a first voice input and a second voice input based on cosine similarity will be described in the present disclosure, the method of determining a similarity is not limited thereto. For example, a first vector related to first text and a second vector related to second text may be created. A cosine similarity between the first vector and the second vector may be calculated based on Formula 1 below. [Equation 1] $cos \left(Θ\right) = \frac{A ⋅ B}{\left‖A\right‖ \left‖B\right‖} = \frac{{\sum }_{i = 1}^{n} {A}_{i} \times {B}_{i}}{\sqrt{{\sum }_{i = 1}^{n} {\left({A}_{i}\right)}^{2}} \times \sqrt{{\sum }_{i = 1}^{n} {\left({B}_{i}\right)}^{2}}}$

Here, A·B indicates the dot product of two vectors, an ∥A∥ and ∥B∥ indicate the magnitudes of the two vectors. That is, cosine similarity may be calculated by dividing the dot product of two vectors by the product of the magnitudes of the vectors. Cosine similarity may range from -1 to 1, and two vectors are determined to be similar as the cosine similarity therebetween is closer to 1.

The user identification server 440 may determine whether users who have uttered speech are the same based on the similarity between a plurality of feature vectors. For example, when a similarity between a first feature vector related to the first voice input and a second feature vector related to the second voice input is equal to or greater than a predetermined standard, the user identification server 440 may determine that the user who has uttered the first voice input and the user who has uttered the second voice input are the same.

According to an embodiment, the user identification server 440 may obtain a vector by processing a voice feature vector using an algorithm such as the Gaussian mixture model (GMM), supervector, i-vector, d-vector, x-vector, or the like. The user identification server 440 may determine whether users who have uttered voices are the same based on a similarity between a first vector obtained by processing a first feature vector and a second vector obtained by processing a second feature vector.

The user identification server 440 may store audio data. The user identification server 440 may store data on voiceprint (hereinafter, voiceprint information). Here, voiceprint information may include a voice feature vector and/or a vector obtained by processing the voice feature vector.

The user identification server 440 may store a voice database. The voice database regarding voices may include unique identification information related to the electronic device 100 (hereinafter referred to as device identification information), unique identification information related to a user account (hereinafter referred to as user identification information), voice data mapped to user identification information, voiceprint information mapped to user identification information.

The device identification information, user identification information, audio data, and voiceprint information included in the voice database may be stored in the user identification server 440 in association with one another. For example, at least one piece of device identification information, a plurality of pieces of audio data, and/or a plurality of pieces of voiceprint information may be mapped to user identification information. That is, it may be interpreted that device identification information, audio data, and voiceprint information are mapped to a user account and stored in the user identification server 440. In the present disclosure, an example in which a plurality of pieces of audio data and a plurality of pieces of voiceprint information are all mapped to user identification information included in the voice database will be described.

The user identification server 440 may update voiceprint information included in a voice database based on audio data included in the voice database. For example, the user identification server 440 may generate voiceprint information related to audio data included in the voice database using an algorithm different from a previously used algorithm. Here, the user identification server 440 may change the voiceprint information included in the voice database to the newly generated voiceprint information.

The account server 450 may manage data regarding user accounts. The account server 450 may manage user account IDs, passwords, user identification information, device identification information mapped to user accounts, and whether or not users agree to terms and conditions related to various functions.

The account server 450 may store a database regarding user accounts. The database regarding user accounts may include user account IDs, passwords, user identification information, device identification information mapped to the user accounts, registration dates and times of the user accounts, whether or not users agree to terms and conditions related to various functions, and dates and times when users agree to the terms and conditions.

The account server 450 may communicate with the electronic device 100. For example, the account server 450 may create and register a user account based on data from the electronic device 100. For example, the account server 450 may approve login of a user account based on an ID and a password received from the electronic device 100.

FIG. 4 is a block diagram for describing the configuration of the server according to an embodiment of the present disclosure.

Referring to FIG. 4, the server 400 may include a preprocessor 460, a controller 470, a communication part 480, and/or a database 490.

The preprocessor 460 may preprocess speech received through the communication part 480 or speech stored in the database 490.

The preprocessor 460 may be implemented as a separate chip from the controller 470 or may be implemented as a chip included in the controller 470.

The preprocessor 460 may receive a voice signal (uttered by a user) and filter noise signals from the voice signal before converting the received voice signal into text data.

If the preprocessor 460 is provided in the electronic device 100, the preprocessor 460 may recognize a startup word for activating speech recognition of the electronic device 100. The preprocessor 460 may convert the startup word received through the user input interface 150 into text data, and if the converted text data is text data related to a pre-stored startup word, determine that the startup word is recognized.

The preprocessor 460 may convert the noise-removed voice signal into a power spectrum.

A power spectrum may be a parameter that indicates a frequency component included in a temporally varying waveform of a voice signal and the magnitude of the frequency component.

A power spectrum shows a distribution of squared amplitude values according to the frequency of the waveform of a voice signal. This will be described with reference to FIG. 5.

FIG. 5 is a diagram illustrating an example of converting a voice signal into a power spectrum according to an embodiment of the present disclosure.

FIG. 5 shows a voice signal 510. The voice signal 510 may be a signal received from an external device or may be a signal previously stored in the memory 170.

The x-axis of the voice signal 510 represents time, and the y-axis represents amplitude.

A power spectrum processor 463 may convert the voice signal 510 in which the x-axis is the time axis into a power spectrum 520 in which the x-axis is the frequency axis. The power spectrum processor 463 may convert the voice signal 510 into the power spectrum 520 using Fast Fourier transform (FFT). The x-axis of the power spectrum 520 represents frequency, and the y-axis represents the square of amplitude.

Referring back to FIG. 4, the functions of the preprocessor 460 and the controller 470 described in FIG. 4 may also be performed in the NLP server 430.

The preprocessor 460 may include a wave processor 461, a frequency processor 462, the power spectrum processor 463, a speech-to-text (STT) converter 464, and the like.

The wave processor 461 may extract the waveform of speech.

The frequency processor 462 may extract the frequency band of the speech.

The power spectrum processor 463 may extract the power spectrum of the speech.

A power spectrum may be a parameter that indicates, when a temporally varying waveform is given, a frequency component included in the waveform and the magnitude of the frequency component.

The STT converter 464 may convert speech into text. The STT converter 464 may convert speech in a specific language into text in that language.

The controller 470 may control the overall operation of the server 400. The controller 470 may include a speech analyzer 471, a text analyzer 472, a feature clustering part 473, a text mapper 474, and/or a speech synthesizer 475.

The speech analyzer 471 may extract speech characteristic information using one or more of the waveform of speech, the frequency band of the speech, and the power spectrum of the speech preprocessed in the preprocessor 460. The speech characteristic information may include one or more of information on the sex of a speaker, the voice (or tone) of the speaker, the pitch of voice, the speaking style of the speaker, the speech rate of the speaker, and the emotion of the speaker. Additionally, the speech characteristic information may further include the timbre of the speaker.

The text analyzer 472 may extract main expressions from text converted by the STT converter 464. Upon detecting a change in tone between phrases from the converted text, the text analyzer 472 may extract the phrase with a different tone as a main expression phrase. The text analyzer 472 may determine that the tone has changed when the frequency band between phrases has changed more than a preset band. The text analyzer 472 may extract key words from phrases in the converted text. A key word may be a noun present in a phrase, but this is merely an example.

The feature clustering part 473 may classify the speech type of the speaker using the speech characteristic information extracted by the speech analyzer 471. The feature clustering part 473 may classify the speech type of the speaker by assigning a weight to each type item constituting the speech characteristic information. The feature clustering part 473 may classify the speech type of the speaker using an attention technique of a deep learning model.

The text mapper 474 may translate text converted into a first language into text in a second language. The text mapper 474 may map the text translated into the second language with the text in the first language. The text mapper 474 may map main expressions constituting the text in the first language to corresponding phrases in the second language. The text mapper 474 may map a speech type related to the main expressions constituting the text in the first language to phrases in the second language. This is for the purpose of applying the classified speech type to the phrases in the second language.

The speech synthesizer 475 may apply the speech type and speaker's tone classified by the feature clustering part 473 to the main expressions of the text translated into the second language in the text mapper 474 to generate synthetic speech.

The controller 470 may determine the speech characteristics of the user using one or more of the transmitted text data or the power spectrum 520.

Speech characteristics of a user may include the sex, pitch, tone, speech topic, speech rate, and voice volume of the user.

The controller 470 may obtain the frequency of the voice signal 510 and the amplitude corresponding to the frequency.

The controller 470 may determine the sex of the user who has uttered the voice using the frequency band of the power spectrum 470. For example, if the frequency band of the power spectrum 520 is within a preset first frequency band range, the controller 470 may determine that the user is male.

If the frequency band of the power spectrum 520 is within a preset second frequency band range, the controller 470 may determine that the user is female. Here, the second frequency band range may be higher than the first frequency band range.

The controller 470 may determine the pitch of voice using the frequency band of the power spectrum 520. For example, the controller 470 may determine the pitch of the voice based on the amplitude within a specific frequency band.

The controller 470 may determine the user's tone using the frequency band of the power spectrum 520. For example, the controller 470 may determine a frequency band with an amplitude equal to or greater than a certain level among the frequency bands of the power spectrum 520 as a main sound range of the user and determine this main sound range as the user's tone.

The controller 470 may determine the user's speech rate based on the number of syllables uttered per unit time from the converted text data.

The controller 470 may determine the topic of the user's speech using the Bag-Of-Word Model technique for the converted text data.

The Bag-Of-Word Model technique is a technique of extracting frequently used words based on the frequency of a word in a sentence. Specifically, the Bag-Of-Word Model technique is a technique of extracting unique words within a sentence and expressing the frequency of each extracted word as a vector to determine the features of the topic of speech. For example, if words such as "running" and "physical strength" appear frequently in text data, the controller 470 may classify the topic of the user's speech as exercise.

The controller 470 may determine the topic of the user's speech from the text data using a known text categorization technique. The controller 470 may extract keywords from the text data and determine the topic of the user's speech.

The controller 470 may determine the user's voice volume by considering amplitude information in the entire frequency band. For example, the controller 470 may determine the user's voice volume based on the average or weighted average of amplitudes in each frequency band of the power spectrum 470.

The communication part 480 may communicate with an external server by wire or wirelessly. The communication part 480 may communicate with the electronic device 100 by wire or wirelessly.

The database 490 may store speech in first language included in content. The database 490 may store synthetic speech in which speech in the first language has been converted into speech in the second language. The database 490 may store first text related to speech in the first language and second text in which the first text has been translated into the second language. The database 490 may store various learning models required for speech recognition.

Meanwhile, the controller 170 of the electronic device 100 illustrated in FIG. 2 may include the preprocessor 460 and the controller 470 illustrated in FIG. 4. That is, the controller 170 of the electronic device 100 may perform the functions of the preprocessor 460 and the controller 470.

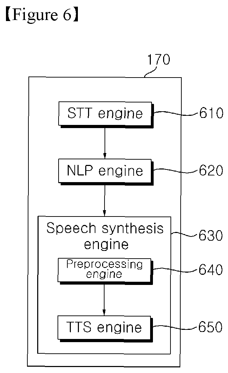

FIG. 6 is a block diagram illustrating a configuration of a controller for speech recognition and synthesis of an image display device according to an embodiment of the present disclosure.

That is, the speech recognition and synthesis process illustrated in FIG. 6 may be performed by the controller 170 of the electronic device 100 without using the server.

Referring to FIG. 6, the processor 170 of the electronic device 100 may include an STT engine 610, an NLP engine 620, and a speech synthesis engine 630. Each engine may be either hardware or software.

The STT engine 610 may perform the function of the STT server 420 of FIG. 5. That is, the STT engine 610 may convert audio data into text data.

The NLP engine 620 may perform the function of the NLP server 430 shown in FIG. 5. That is, the NLP engine 620 may obtain intent analysis information indicating the speaker's intention from the converted text data.

The speech synthesis engine 630 may perform a function of a speech synthesis server. The speech synthesis engine 630 may search a database for syllables or words related to given text data and synthesize a combination of the searched syllables or words to generate synthetic speech.

The speech synthesis engine 630 may include a preprocessing engine 631 and a TTS engine 632.

The preprocessing engine 631 may preprocess text data before generating synthetic speech. Specifically, the preprocessing engine 631 performs tokenization to divide text data into tokens, which are meaningful units. After performing tokenization, the preprocessing engine 631 may perform a cleansing operation to remove unnecessary characters and symbols to eliminate noise. Thereafter, the preprocessing engine 631 may generate the same word token by integrating word tokens with different expression methods. Thereafter, the preprocessing engine 631 may remove meaningless word tokens (stopwords).

The TTS engine 632 may synthesize speech related to the preprocessed text data and generate synthetic speech.

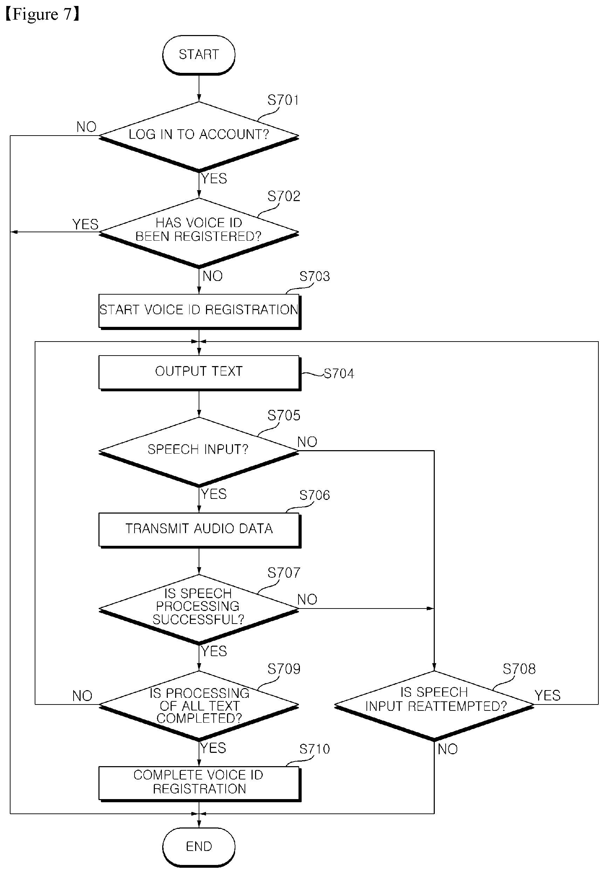

FIG. 7 is a flowchart of a method of operating an electronic device according to an embodiment of the present disclosure.

Referring to FIG. 7, the electronic device 100 may determine whether a user account is logged in to the server 400 in operation S701. For example, a user may log in to the server 400 with a user account by entering the user account ID and password.

According to an embodiment, when the user first logs in to the server 400 using the electronic device 100 with the user account, the electronic device 100 may include user identification information related to the user account in a user list. For example, in a case where three different user accounts log in to the server 400 using the electronic device 100, the user list stored in the electronic device 100 may include three different pieces of user identification information.

In operation S702, the electronic device 100 may determine whether voice-related identification information (hereinafter referred to as voice ID) is registered with respect to the user account logged in to the server 400. Here, the voice ID may include voiceprint information stored in the user identification server 440. For example, the server 400 may transmit information on whether a voice ID has been registered with respect to the user account logged in to the server 400 to the electronic device 100.

According to an embodiment, the server 400 may determine whether the voice ID has been registered based on whether voiceprint information has been mapped to user identification information, which is unique identification information related to the user account logged in to the server 400. Here, when the voice ID has not been registered with respect to the user account, the number of pieces of voiceprint information mapped to the user identification information may be 0.

According to an embodiment, the server 400 may determine that the voice ID has been registered if the number of pieces of voiceprint information mapped to the user identification information is two or more predetermined numbers and determine that the voice ID has not been registered if the number of pieces of voiceprint information is less than the predetermined numbers. For example, in the case of a user account for which a voice ID has been registered, six different pieces of voiceprint information may be mapped to user identification information. For example, in the case of a user account for which a voice ID has not been registered, five or fewer voiceprint information may be mapped to user identification information.

According to an embodiment, a flag value indicating whether a voice ID has been registered may be mapped to user identification information stored in the server 400. Here, user identification information to which a flag value is mapped may be stored in the user identification server 440 and/or the account server 450. The server 400 may determine whether the voice ID has been registered based on the flag value mapped to the user identification information. For example, a flag value mapped to user identification information may be 0 in the case of a user account for which a voice ID has not been registered, and a flag value mapped to user identification information may be 1 in the case of a user account for which a voice ID has been registered.

When the voice ID has not been registered with respect to the user account, the electronic device 100 may start a process of registering the voice ID in operation S703. For example, when starting the process of registering the voice ID, the electronic device 100 may transmit data containing the device identification information, the user identification information, a value indicating the start of registration of the voice ID, etc. to the server 400.

The electronic device 100 may output preset text in operation S704. The electronic device 100 may output any one of a plurality of pieces of preset text. For example, when the electronic device 100 is the image display device 100a, the electronic device 100 may output preset text through the display 180.

According to an embodiment, the server 400 may transmit any one of a plurality of pieces of preset text to the electronic device 100 in a preset order. Here, the electronic device 100 may output the preset text received from the server 400.

The electronic device 100 may determine whether speech with respect to the preset text is input in operation S705. For example, the electronic device 100 may determine whether speech is input through a microphone included in the input part 160 within a preset time. Here, the voice signal related to the speech input through the microphone may be transmitted to the controller 170 through the user input interface 150. For example, the electronic device 100 may determine whether data containing a voice signal related to speech uttered by the user is received from the remote control device 200 within a preset time.

When speech with respect to the preset text is input, the electronic device 100 may transmit audio data including the voice signal related to the speech to the server 400 in operation S706. Here, the electronic device 100 may transmit the device identification information, the user identification information, and a language code indicating the type of language to the server 400 along with the audio data.

The server 400 may convert the voice signal included in the audio data received from the electronic device 100 into text. The server 400 may determine whether the text converted from the voice signal and the preset text correspond to each other. For example, the server 400 may determine whether the text converted from the voice signal and the preset text correspond to each other based on the similarity therebetween.

The server 400 may generate voiceprint information related to the voice signal when the text converted from the voice signal and the preset text correspond to each other. The server 400 may map the voiceprint information generated with respect to the preset text to the user identification information and store the same. The server 400 may map the audio data received with respect to the preset text to the user identification information and store the same.

The electronic device 100 may determine whether speech processing for the preset text is successful based on the response received from the server 400 in operation S707. For example, if the text converted from the voice signal and the preset text correspond to each other, the server 400 may notify the electronic device 100 of success of speech processing. For example, when the voiceprint information related to the voice signal has been generated, the server 400 may notify the electronic device 100 of success of speech processing.

Meanwhile, in operation S708, the electronic device 100 may determine whether the user reattempts to input speech when speech with respect to the preset text is not input or when speech processing for the preset text fails. For example, the electronic device 100 may reattempt to input speech based on a user input from the user reattempting to input speech. Here, the electronic device 100 may output the preset text again.

In operation S709, if speech processing for the preset text is successful, the electronic device 100 may determine whether processing for all pieces of text is completed. For example, if all speech processing for six pieces of text is successful, processing for all pieces of text may be completed. Meanwhile, when processing for five pieces of preset text is completed, the electronic device 100 may output the last preset text.

The electronic device 100 may end the process of registering the voice ID when processing for all pieces of text is completed in operation S710. For example, when the electronic device 100 is the image display device 100a, the electronic device 100 may output a screen indicating completion of voice ID registration through the display 180. For example, the electronic device 100 may transmit data indicating completion of voice ID registration to the account server 450.

According to one embodiment, the electronic device 100 may log in to the server 400 with a user account with a registered voice ID based on speech input to the electronic device 100.

When speech is input, the electronic device 100 may transmit audio data related to the input speech to the server 400. Here, the electronic device 100 may transmit device identification information, a user list, and a language code indicating the type of language to the server 400 along with the audio data.

The server 400 may generate voiceprint information regarding the speech input to the electronic device 100 based on the audio data received from the electronic device 100. The server 400 may search an audio database for voiceprint information (hereinafter referred to as candidate voiceprint information) related to user identification information included in the user list received from the electronic device 100. The server 400 may determine whether the candidate voiceprint information and the generated voiceprint information are related to each other. The server 400 may determine user identification information to which candidate voiceprint information related to the generated voiceprint information is mapped among the candidate voiceprint information as user identification information related to the speech input to the electronic device 100. If there is no candidate voiceprint information related to the generated voiceprint information, the server 400 may determine that there is no user identification information related to the speech input to the electronic device 100.

The server 400 may transmit a result of processing the audio data received from the electronic device 100 to the electronic device 100. For example, the server 400 may transmit text converted from the audio data received from the electronic device 100, a result of intent analysis performed on the converted text, user identification information related to the speech, etc. to the electronic device 100.

The electronic device 100 may perform an operation related to the speech input to the electronic device 100 based on the audio data processing result received from the server 400. For example, if the user identification information related to the speech is not related to the user account currently logged in to the server 400, the electronic device 100 may log in to the server 400 with a user account related to the user identification information related to the speech. For example, if the user identification information related to the speech is related to the user account currently logged in to the server 400, or if there is no user identification information related to the speech, the electronic device 100 may maintain the logged-in state of the user account currently logged in to the server 400.

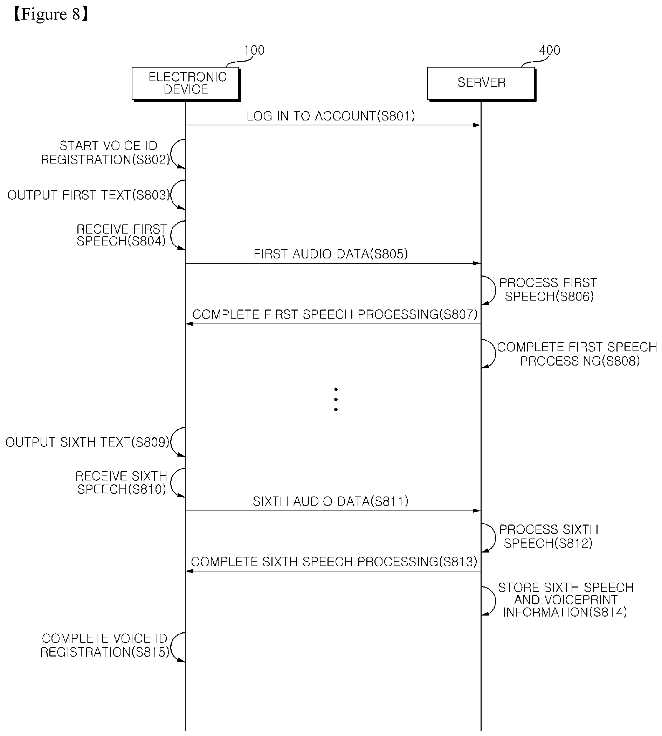

FIG. 8 is a flowchart of a method of operating a system according to an embodiment of the present disclosure.

Referring to FIG. 8, the electronic device 100 may log in to the server 400 using a user account in operation S801.

The electronic device 100 may start a process of registering a voice ID in operation S802.

The electronic device 100 may output first text among a plurality of pieces of preset text in operation S803.

The electronic device 100 may receive first speech for the first text in operation S804.

The electronic device 100 may transmit first audio data including a speech signal related to the first speech to the server 400 in operation S805.

The server 400 may process the first speech for the first text based on the first audio data received from the electronic device 100 in operation S806. The server 400 may convert the speech signal related to the first speech included in the first audio data received from the electronic device 100 into text. The server 400 may determine whether the text converted from the speech signal related to the first speech and the first text correspond to each other.

The server 400 may notify the electronic device 100 of completion of processing for the first speech in operation S807. For example, the server 400 may notify the electronic device 100 of success of processing for the first speech based on the fact that the text converted from the speech signal related to the first speech corresponds to the first text.

Further, the server 400 may generate first voiceprint information with respect to the first speech based on the speech signal related to the first speech based on the fact that the text converted from the speech signal related to the first speech corresponds to the first text.

The server 400 may store the first audio data and the first voiceprint information with respect to the first speech in operation S808. The server 400 may map the first audio data and first voiceprint information to the user identification information related to the logged-in user account and store the same.

The electronic device 100 may output the second to fifth pieces of text in stages. The electronic device 100 may sequentially receive second to fifth speeches related to the second to fifth pieces of text. The electronic device 100 may sequentially transmit second to fifth pieces of audio data related to the second to fifth speeches to the server 400.

The server 400 may process the second to fifth speeches based on the second to fifth pieces of audio data received from the electronic device 100. Additionally, the server 400 may sequentially generate and store second to fifth pieces of speech information related to the second to fifth speeches.

The electronic device 100 may output sixth text from among a plurality of pieces of preset text in operation S809.

The electronic device 100 may receive sixth speech with respect to the sixth text in operation S810.

The electronic device 100 may transmit sixth audio data including a speech signal related to the sixth speech to the server 400 in operation S811.

The server 400 may process the sixth speech with respect to the sixth text based on the sixth audio data received from the electronic device 100 in operation S812. The server 400 may convert a speech signal related to the sixth speech included in the sixth audio data received from the electronic device 100 into text. The server 400 may determine whether the text converted from the speech signal related to the sixth speech and the sixth text correspond to each other.

The server 400 may notify the electronic device 100 of completion of processing for the sixth speech in operation S813.

Meanwhile, when the text converted from the speech signal related to the sixth speech and the sixth text correspond to each other, the server 400 may generate sixth voiceprint information regarding the sixth speech based on the speech signal related to the sixth speech.

The server 400 may store the sixth audio data and the sixth voiceprint information regarding the sixth speech in operation S814. The server 400 may map the sixth audio data and the sixth voiceprint information to the user identification information related to the logged-in user account and store the same. Here, six different pieces of audio data and a plurality of pieces of voiceprint information may be mapped to the user identification information related to the logged-in user account.

The electronic device 100 may end the process of registering the voice ID in operation S815. For example, the electronic device 100 may end the process of registering the voice ID based on completion of processing for the six different pieces of preset text.

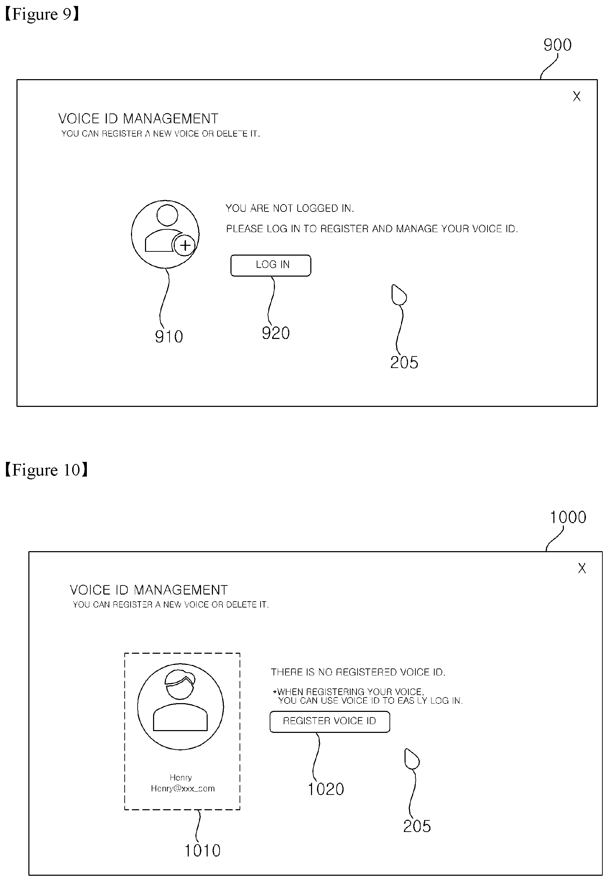

Referring to FIG. 9, if the user account is not logged in to the server 400, the electronic device 100 may output a login screen 900 related to logging in to the server 400 through the display 180. The login screen 900 may include an object 910 indicating a non-login state, and a login object 920 for executing login. When the user selects the login object 920 using a pointer 205 related to the remote control device 200, the electronic device 100 may output a screen for entering an ID and a password. Here, the user may log in to the server 400 with the user account by entering the ID and the password of the user account.

Referring to FIG. 10, when the voice ID has not been registered in the user account logged in to the server 400, the electronic device 100 may output a first account screen 1000 related to the user account for which the voice ID has not been registered. The first account screen 1000 may include an object 1010 indicating a logged-in user account, and an object 1020 regarding voice ID registration. When the user selects the object 1020 regarding voice ID registration using the pointer 205, the electronic device 100 may start the process of registering a voice ID.

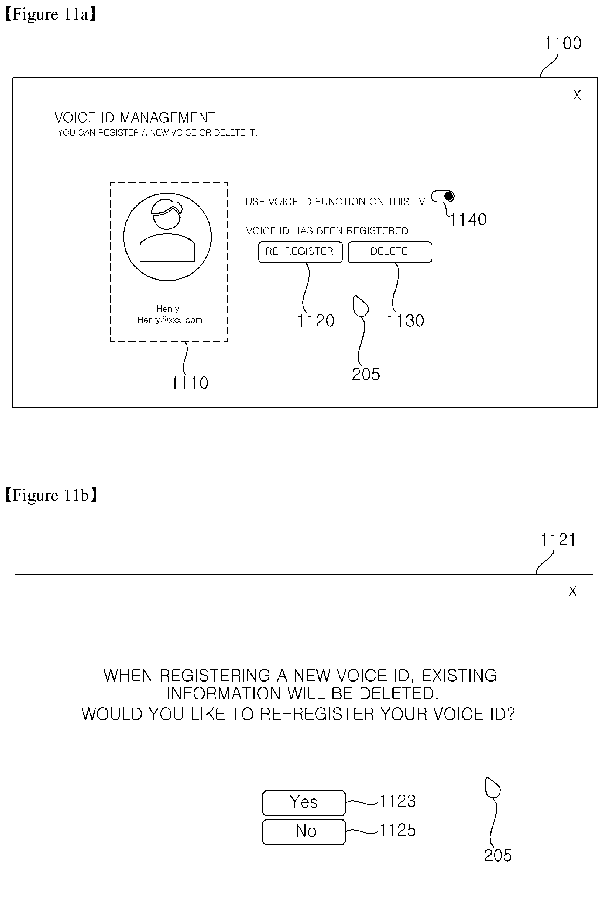

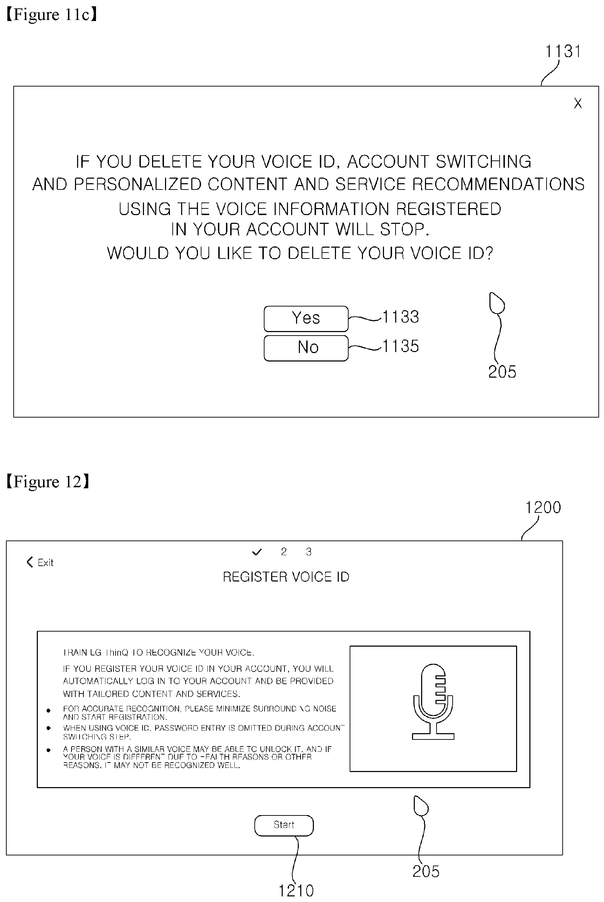

Referring to FIG. 11A to FIG. 11C, when a voice ID has been registered in a user account logged in to the server 400, the electronic device 100 may display a second account screen 1100 related to the user account for which the voice ID has been registered. The second account screen 1100 may include an object 1110 indicating a logged-in user account, a reregistration object 1120 regarding voice ID re-registration, a deletion object 1130 regarding voice ID deletion, and an activation object 1140 regarding the use of a function related to voice ID. The user may select the activation object 1140 using the pointer 205 to activate or deactivate the use of a function related to voice ID.

When the user selects the reregistration object 1120 using the pointer 205, the electronic device 100 may display a first notification screen 1121 for indicating that data related a previously registered voice ID is deleted from the server 400 due to reregistration of a voice ID. The user may select a confirmation object 1123 using the pointer 205 to reregister a voice ID, or select a cancellation object 1125 to maintain a previously registered voice ID.

When the user selects the deletion object 1130 using the pointer 205, the electronic device 100 may display a second notification screen 1131 for indicating that data related to a previously registered voice ID is deleted from the server 400 due to deletion of a voice ID. The user may select a confirmation object 1133 using the pointer 205 to delete a voice ID, or select a cancellation object 1135 to maintain a previously registered voice ID.

Referring to FIG. 12, when the object 1020 regarding voice ID registration is selected on the first account screen 1000, or when a confirmation object 1123 is selected on a first notification screen 1121, the electronic device 100 may output a start screen 1200 for starting voice ID registration. When the user selects a start object 1210 using the pointer 205, the electronic device 100 may output a text screen for displaying preset text.

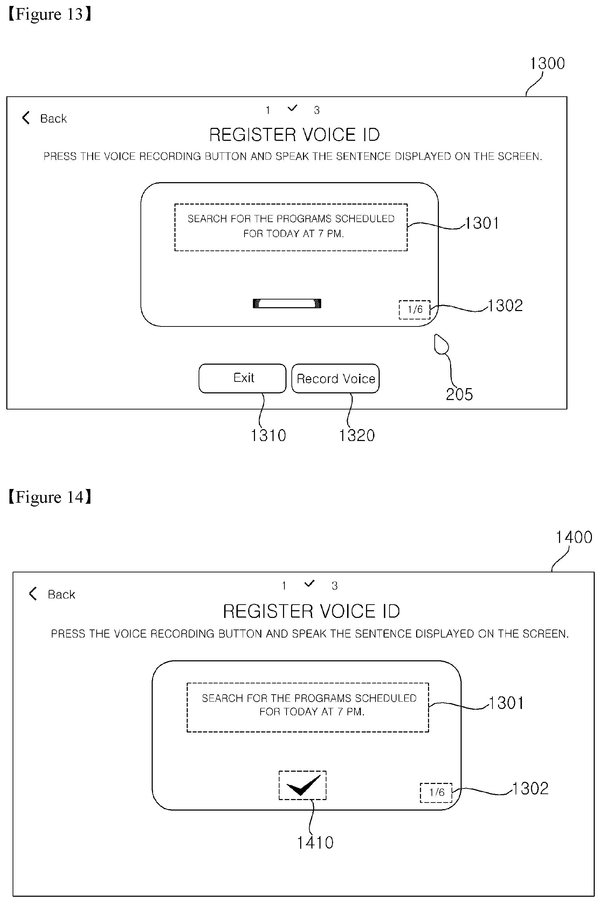

Referring to FIG. 13, the electronic device 100 may output a text screen 1300 for displaying any one of a plurality of pieces of preset text. The text screen 1300 may include preset text 1301, a text sequence number 1302, an end object 1310 for ending the process of registering a voice ID, and an input object 1320 for receiving speech.

When the user selects the end object 1310 using the pointer 205, the process of registering a voice ID may end. For example, when the process of registering a voice ID ends, all data stored in the server 400 while the process of registering a voice ID is in progress may be deleted.

When the user selects the input object 1320 using the pointer 205, the electronic device 100 may receive speech with respect to text.

According to an embodiment, when the user presses a predetermined button (e.g., a voice input button) included in the remote control device 200 while the text screen 1300 is displayed, the electronic device 100 may receive speech with respect to text based on the user input of pressing the predetermined button, received from the remote control device 200.

Meanwhile, according to an embodiment, when the user presses a predetermined button (e.g., the voice input button) included in the remote control device 200 while the process of registering a voice ID is in progress, the electronic device 100 may stop the process of registering a voice ID based on the user input of pressing the predetermined button, received from the remote control device 200. Here, the user input of pressing a predetermined button (e.g., the voice input button) included in the remote control device 200 may correspond to a user input of starting speech recognition for speech received through the remote control device 200. The electronic device 100 may perform an operation related to speech recognition on audio data including a speech signal received from the remote control device 200.

Referring to FIG. 14, when processing of speech with respect to text is successful, the electronic device 100 may display a success screen 1400 for indicating the success of the text processing. The success screen 1400 may include an object 1410 indicating the success of processing the speech with respect to the text.

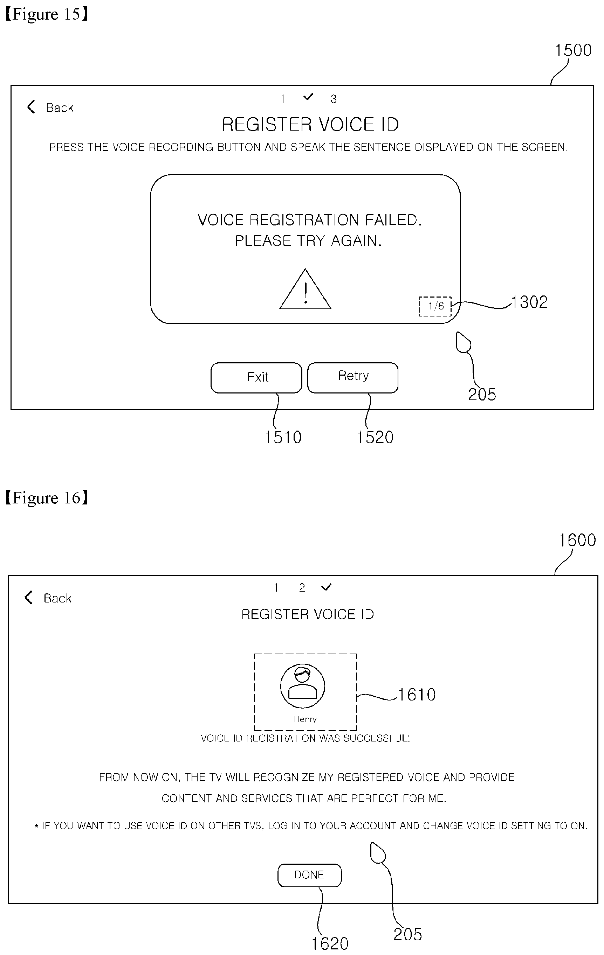

Referring to FIG. 15, when speech with respect to the text is not input or processing of the speech with respect to the text fails, the electronic device 100 may display a failure screen 1500 for indicating the failure of processing the speech with respect to the text. The failure screen 1500 may include a termination object 1510 indicating termination of the process of registering a voice ID, a re-input object 1520 indicating reattempt to receive speech, etc. When the user selects the re-input object 1520 using the pointer 205, the electronic device 100 may receive speech with respect to the text again.

Referring to FIG. 16, upon completion of processing of all pieces of text, the electronic device 100 may display a completion screen 1600 for indicating completion of voice ID registration. The completion screen 1600 may include an object 1610 indicating the user account for which the voice ID has been registered, a completion object 1620 indicating completion of the process of registering the voice ID, etc. When the user selects the completion object 1620 using the pointer 205, the electronic device 100 may complete the process of registering the voice ID.

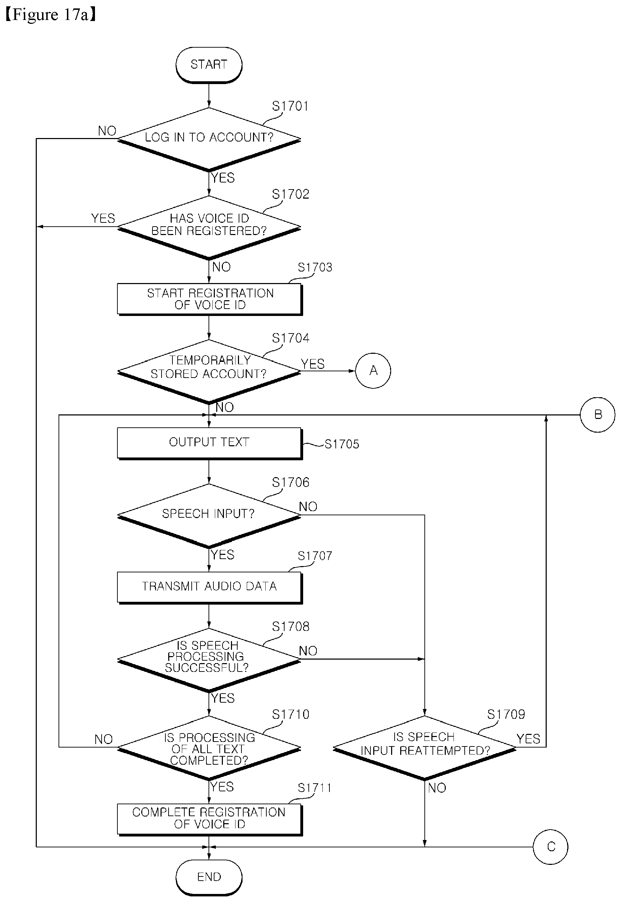

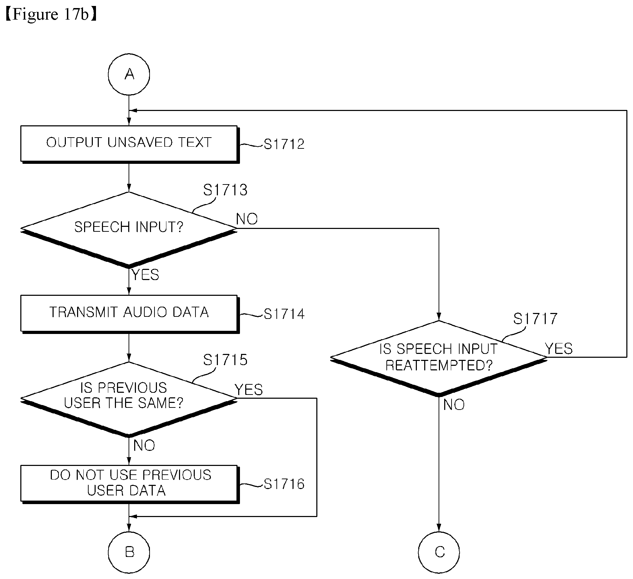

FIG. 17A and FIG. 17B are flowcharts of a method of operating an electronic device according to another embodiment of the present disclosure. Detailed description of redundant parts described in FIG. 7 will be omitted.

Referring to FIG. 17A, the electronic device 100 may determine whether a user account is logged in to the server 400 in operation S1701.

The electronic device 100 may determine whether a voice ID has been registered for the user account logged in to the server 400 in operation S1702.

If no voice ID has been registered for the user account, the electronic device 100 may initiate a process of registering a voice ID in operation S1703.

The electronic device 100 may determine whether the user account is a user account for which a voice ID has been temporarily stored in operation S1704. For example, the server 400 may transmit information on whether a voice ID has been temporarily stored for the user account logged in to the server 400 to the electronic device 100.

According to one embodiment, the server 400 may determine whether a voice ID has been temporarily stored based on whether voiceprint information is mapped to user identification information, which is unique identification information related to the user account logged in to the server 400. In the case of a user account for which a voice ID has been temporarily stored, more than a minimum number of pieces of voiceprint information may be mapped to the user identification information. Here, the minimum number may be less than a predetermined number of 6.

According to one embodiment, the server 400 may determine whether a voice ID has been temporarily stored based on a flag value mapped to user identification information. For example, in the case of a user account for which a voice ID has been temporarily stored, the flag value mapped to the user identification information may be 2.

The electronic device 100 may output preset text in operation S1705. For example, when no voice ID has been temporarily stored, the server 400 may transmit first text among a plurality of pieces of preset text to the electronic device 100.

The electronic device 100 may determine whether speech with respect to the preset text is input in operation S1706.

When speech with respect to the preset text is input, the electronic device 100 may transmit audio data including a speech signal related to the speech to the server 400 in operation S1707.

The electronic device 100 may determine whether processing of the speech with respect to the preset text was successful based on a response received from the server 400 in operation S1708.

In operation S1709, the electronic device 100 may determine whether to reattempt speech input when speech with respect to the preset text is not input or processing of the speech with respect to the preset text fails.

In operation S1710, the electronic device 100 may determine whether processing of all pieces of text is completed when processing of the speech with respect to the preset text is successful.

The electronic device 100 may complete the process of registering a voice ID when processing of all pieces of text is completed in operation S1711.

Referring to FIG. 17B, when a voice ID has been temporarily stored in operation S1712, the electronic device 100 may output any one (hereinafter, unsaved text) except text related to the voiceprint information mapped to the user identification information among the plurality of pieces of preset text. For example, when voiceprint information related to first text to third text is mapped to user identification information, which is unique identification information related to the user account logged in to the server 400, the server 400 may transmit fourth text to the electronic device 100 as unsaved text. Here, the electronic device 100 may output the fourth text received from the server 400.

The electronic device 100 may determine whether speech with respect to unsaved text is input in operation S1713.

When speech with respect to the unsaved text is input, the electronic device 100 may transmit audio data including a speech signal related to the speech to the server 400 in operation S1714.

The electronic device 100 may determine whether a previous user who has temporarily stored the voice ID is the same as the current user who has uttered the speech with respect to the unsaved text in operation S1715. For example, the electronic device 100 may determine whether the previous user is the same as the current user based on a result of determining whether the users are the same received from the server 400.

The server 400 may convert the speech signal included in the audio data received from the electronic device 100 into text. The server 400 may determine whether the text converted from the speech signal is related to the unsaved text. For example, the server 400 may determine whether the converted text and the unsaved text are related to each other based on the similarity between the text converted from the speech signal and the unsaved text.

When the text converted from the speech signal and the unsaved text are related to each other, the server 400 may generate voiceprint information related to the speech with respect to the unsaved text (hereinafter, unsaved voiceprint information) based on the speech signal included in the audio data received from the electronic device 100. The server 400 may determine whether at least one of voiceprint information mapped to user identification information is related to the unsaved voiceprint information. For example, when voiceprint information related to the first text to the third text is mapped to user identification information, the server 400 may calculate the similarity between first voiceprint information related to the first text and the unsaved voiceprint information. Here, the server 400 may determine that the first voiceprint information and the unsaved voiceprint information are related to each other when the similarity between the first voiceprint information and the unsaved voiceprint information is greater than a predetermined criterion. Additionally, the server 400 may determine that the previous user is the same as the current user when the first voiceprint information and the unsaved voiceprint information are related to each other.

If the previous user is different from the current user, the electronic device 100 may determine not to use data related to the previous user stored in the server 400 in operation S1716. For example, if the electronic device 100 is an image display device 100a, the electronic device 100 may display a screen for representing that the previous user is different from the current user through the display 180.

The server 400 may maintain voiceprint information mapped to the user identification information when the previous user is the same as the current user. For example, in a state where the voiceprint information related to the first text to the third text is mapped to the user identification information, the server 400 may map the unsaved voiceprint information to the user identification information and store the same as voiceprint information related to the fourth text. Additionally, the server 400 may sequentially transmit fifth text and sixth text to the electronic device 100.

The server 400 may delete the voiceprint information mapped to the user identification information when the previous user is different from the current user. Here, the server 400 may also delete audio data mapped to the user identification information. For example, the server 400 may delete the voiceprint information related to the first text to the third text mapped to the user identification information, and map the unsaved voiceprint information to the user identification information and store the same as voiceprint information related to the fourth text. Additionally, the server 400 may sequentially transmit text other than the fourth text among the plurality of pieces of preset text to the electronic device 100.

In operation S1717, the electronic device 100 may determine whether to reattempt to input speech when no speech with respect to the unsaved text is input or processing of speech with respect to the unsaved text fails. For example, the electronic device 100 may reattempt to input speech based on user input for reattempting to input speech. Here, the electronic device 100 may output the unsaved text again.

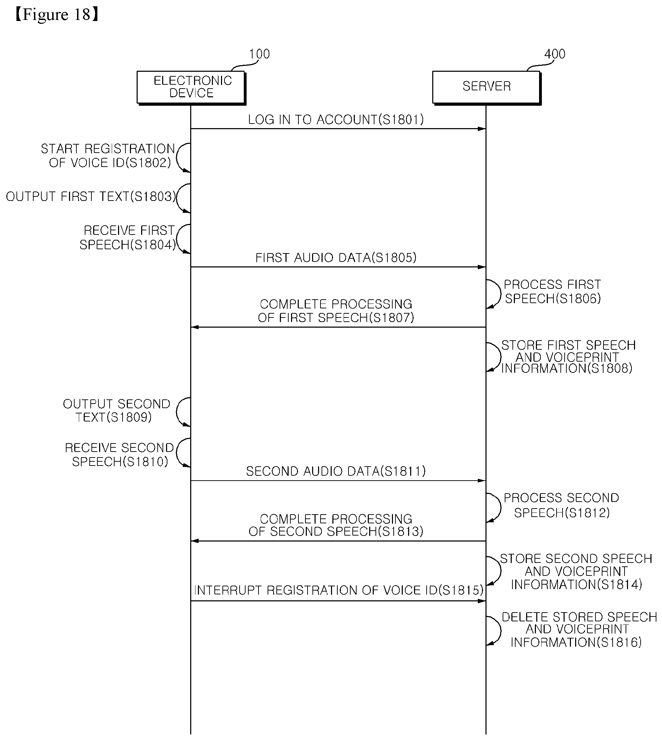

FIG. 18 is a flowchart of a method of operating a system when a voice ID is not registered and temporarily stored according to an embodiment of the present disclosure.

Referring to FIG. 18, the electronic device 100 may log in to the server 400 using a user account in operation S1801.

The electronic device 100 may initiate the process of registering a voice ID in operation S1802.

The electronic device 100 may output first text from among a plurality of pieces of preset text in operation S1803.

The electronic device 100 may receive first speech with respect to the first text in operation S1804.

The electronic device 100 may transmit first audio data including a speech signal related to the first speech to the server 400 in operation S1805.

The server 400 may process the first speech with respect to the first text based on the first audio data received from the electronic device 100 in operation S1806.

The server 400 may notify the electronic device 100 of completion of processing of the first speech in operation S1807.

The server 400 may store the first audio data and first voiceprint information on the first speech in operation S1808.

The electronic device 100 may output second text among the plurality of pieces of preset text in operation S1809.

The electronic device 100 may receive second speech with respect to the second text in operation S1810.

The electronic device 100 may transmit second audio data including a speech signal related to the second speech to the server 400 in operation S1811.

The server 400 may process the second speech with respect to the second text based on the second audio data received from the electronic device 100 in operation S1812.

The server 400 may notify the electronic device 100 of completion of processing of the second speech in operation S1813.

The server 400 may store the second audio data and second voiceprint information on the second speech in operation S1814.

The electronic device 100 may notify the server 400 of interruption of voice ID registration in operation S1815.

For example, when the user presses a power button included in the remote control device 200, the electronic device 100 may be turned off based on a signal related to the user input of pressing the power button received from the remote control device 200. Here, the electronic device 100 may notify the server 400 of interruption of voice ID registration based on the power being turned off.

For example, when the user presses a button related to a predetermined function (e.g., an OTT service button) included in the remote control device 200, the electronic device 100 may execute the predetermined function based on a signal related to the user input of pressing the button related to the predetermined function (e.g., OTT service button) received from the remote control device 200. In this case, the electronic device 100 may notify the server 400 of interruption of voice ID registration based on execution of the predetermined function. When execution of the predetermined function is terminated, the electronic device 100 may output a notification for notifying the user of interruption of voice ID registration. The electronic device 100 may determine whether to resume interrupted voice ID registration based on user input. When resuming interrupted voice ID registration, the electronic device 100 may initiate the process of registering a voice ID.

For example, when the user presses a speech recognition-related button (e.g., speech input button) included in the remote control device 200, the electronic device 100 may execute a speech recognition function based on a signal related to the user input of pressing the speech recognition-related button received from the remote control device 200. In this case, the electronic device 100 may notify the server 400 of interruption of voice ID registration based on execution of the speech recognition function. When execution of the speech recognition function is terminated, the electronic device 100 may output a notification for notifying the user of interruption of voice ID registration. The electronic device 100 may determine whether to resume interrupted voice ID registration based on user input. When resuming interrupted voice ID registration, the electronic device 100 may initiate the process of registering a voice ID.

In operation S1816, the server 400 may check the number of pieces of voiceprint information stored by being mapped to user identification information upon notification of interruption of voice ID registration from the electronic device 100. Here, the server 400 may delete audio data and voiceprint information stored by being mapped to the user identification information based on the number of pieces of voiceprint information stored by being mapped to the user identification information being 2, which is less than a minimum number (e.g., 3).

Meanwhile, the server 400 may maintain the audio data and voiceprint information stored by being mapped to the user identification information based on the number of pieces of voiceprint information stored by being mapped to the user identification information being equal to or greater than the minimum number (e.g., 3).

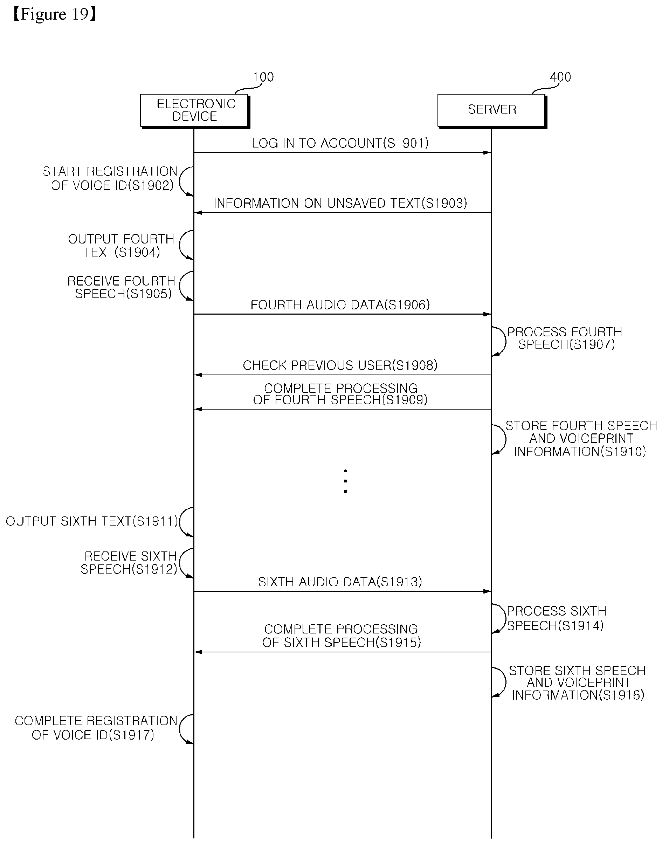

FIG. 19 is a flowchart of a method of operating the system when a voice ID has been temporarily stored according to an embodiment of the present disclosure.

Referring to FIG. 19, the electronic device 100 may log in to the server 400 using a user account in operation S1901.

The electronic device 100 may initiate the process of registering a voice ID in operation S1902.

The server 400 may transmit information on unsaved text to the electronic device 100 based on a voice ID having been temporarily stored in operation S1903. For example, the server 400 may transmit fourth text to the electronic device 100 as unsaved text based on voiceprint information related to first text to third text being mapped to user identification information, which is unique identification information related to the logged-in user account.

The electronic device 100 may output the fourth text, which is unsaved text, in operation S1904.

The electronic device 100 may receive fourth speech with respect to the fourth text in operation S1905.

The electronic device 100 may transmit fourth audio data including a speech signal related to the fourth speech to the server 400 in operation S1906.

The server 400 may process the fourth speech with respect to the fourth text based on the fourth audio data received from the electronic device 100 in operation S1907.

The server 400 may determine whether fourth voiceprint information generated based on the fourth audio data is related to at least one piece of voiceprint information mapped to the user identification information. For example, the server 400 may determine whether first voiceprint information related to the first text is related to the fourth voiceprint information based on the similarity between the first voiceprint information and the fourth voiceprint information.

In operation S1908, the server 400 may notify the electronic device 100 of the result of determining that a previous user who has temporarily stored the voice ID is the same as the user who has uttered the fourth speech. For example, the server 400 may determine that the previous user is the same as the current user based on the first voiceprint information and the fourth voiceprint information being related to each other.

The server 400 may notify the electronic device 100 of completion of processing of the fourth speech in operation S1909.

The server 400 may store the fourth audio data and fourth voiceprint information on the fourth speech in operation S1910. The server 400 may store the fourth audio data and the fourth voiceprint information by mapping the same to user identification information related to the logged-in user account.

The electronic device 100 may output fifth text. The electronic device 100 may receive fifth speech related to the fifth text. The electronic device 100 may transmit fifth audio data related to the fifth speech to the server 400.

The server 400 may process the fifth speech based on the fifth audio data received from the electronic device 100. Additionally, the server 400 may generate and store fifth audio information related to the fifth speech.

The electronic device 100 may output sixth text among the plurality of pieces of preset text in operation S1911.

The electronic device 100 may receive sixth speech with respect to the sixth text in operation S1912.

The electronic device 100 may transmit sixth audio data including a speech signal related to the sixth speech to the server 400 in operation S1913.

The server 400 may process the sixth speech with respect to the sixth text based on the sixth audio data received from the electronic device 100 in operation S1914.

The server 400 may notify the electronic device 100 of completion of processing of the sixth speech in operation S1915.

The server 400 may store the sixth audio data and sixth voiceprint information on the sixth speech in operation S1916.

The electronic device 100 may complete the process of registering a voice ID in operation S1917.

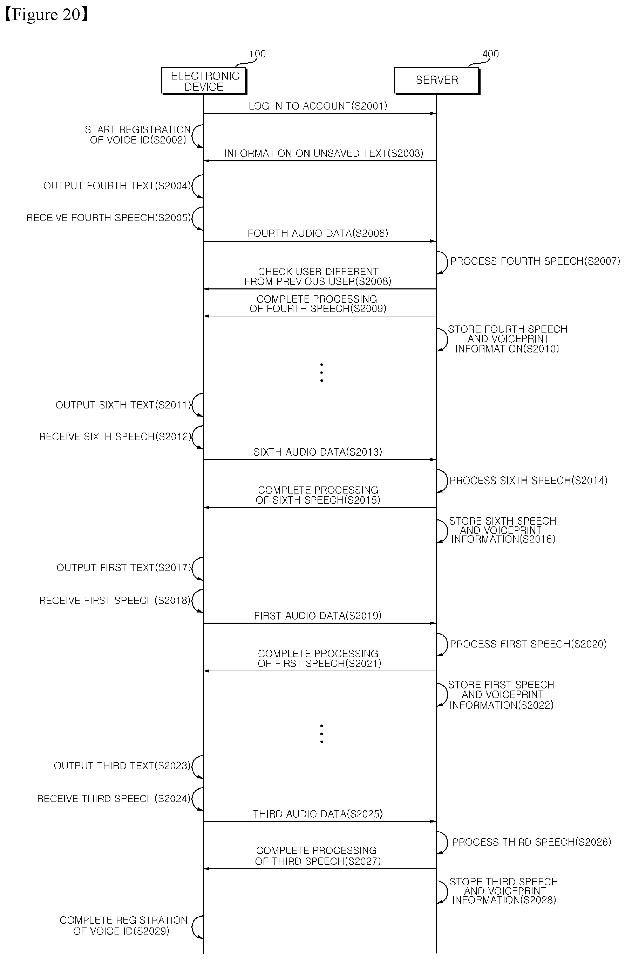

FIG. 20 is a flowchart of a method of operating the system when a voice ID is temporarily stored according to another embodiment of the present disclosure.

Referring to FIG. 20, the electronic device 100 may log in to the server 400 using a user account in operation S2001.

The electronic device 100 may initiate the process of registering a voice ID in operation S2002.

The server 400 may transmit information on unsaved text to the electronic device 100 based on a voice ID having been temporarily stored in operation S2003. For example, the server 400 may transmit the fourth text to the electronic device 100 as unsaved text based on voiceprint information related to the first text to the third text being mapped to user identification information, which is unique identification information related to the logged-in user account.

The electronic device 100 may output the fourth text, which is unsaved text, in operation S2004.

The electronic device 100 may receive fourth speech with respect to the fourth text in operation S2005.

The electronic device 100 may transmit fourth audio data including a speech signal related to the fourth speech to the server 400 in operation S2006.

The server 400 may process the fourth speech with respect to the fourth text based on the fourth audio data received from the electronic device 100 in operation S2007.

The server 400 may notify the electronic device 100 of the result of determining that the previous user who has temporarily stored the voice ID and the user who has uttered the fourth speech are different from each other in operation S2008. For example, the server 400 may determine that the previous user and the current user are different from each other based on the first voiceprint information and the fourth voiceprint information not being related to each other. In this case, the server 400 may delete voiceprint information mapped to the identification information, which is unique identification information related to the logged-in user account.

The server 400 may notify the electronic device 100 of completion of processing of the fourth speech in operation S2009.

The server 400 may store the fourth audio data and the fourth voiceprint information on the fourth speech in operation S2010. The server 400 may store the fourth audio data and the fourth voiceprint information by mapping the same to the user identification information related to the logged-in user account.

Further, the server 400 may transmit any one of the preset text other than the fourth text to the electronic device 100. In the present disclosure, an example in which the fifth text and the sixth text are sequentially transmitted to the electronic device 100 and then the first text to the third text are transmitted to the electronic device 100 will be described.

The electronic device 100 may output the fifth text. The electronic device 100 may receive fifth speech related to the fifth text. The electronic device 100 may transmit fifth audio data related to the fifth speech to the server 400.

The server 400 may process the fifth speech based on the fifth audio data received from the electronic device 100. Additionally, the server 400 may generate and store fifth audio information related to the fifth speech.

The electronic device 100 may output the sixth text among the plurality of pieces of preset text in operation S2011.

The electronic device 100 may receive sixth speech with respect to the sixth text in operation S2012.

The electronic device 100 may transmit sixth audio data including a speech signal related to the sixth speech to the server 400 in operation S2013.

The server 400 may process the sixth speech with respect to the sixth text based on the sixth audio data received from the electronic device 100 in operation S2014.

The server 400 may notify the electronic device 100 of completion of processing of the sixth speech in operation S2015.

The server 400 may store the sixth audio data and sixth voiceprint information on the sixth speech in operation S2016.

The electronic device 100 may output the first text among the plurality of pieces of preset texts in operation S2017.

The electronic device 100 may receive first speech with respect to the first text in operation S2018.

The electronic device 100 may transmit first audio data including a speech signal related to the first speech to the server 400 in operation S2019.

The server 400 may process the first speech with respect to the first text based on the first audio data received from the electronic device 100 in operation S2020.

The server 400 may notify the electronic device 100 of completion of processing of the first speech in operation S2021.

The server 400 may store the first audio data and first voiceprint information on the first speech in operation S2022.

The electronic device 100 may output the second text. The electronic device 100 may receive second speech with respect to the second text. The electronic device 100 may transmit second audio data related to the second speech to the server 400.

The server 400 may process the second speech based on the second audio data received from the electronic device 100. Additionally, the server 400 may generate and store second audio information related to the second speech.

The electronic device 100 may output the third text among the plurality of pieces of preset text in operation S2023.

The electronic device 100 may receive third speech with respect to the third text in operation S2024.

The electronic device 100 may transmit third audio data including a speech signal related to the third speech to the server 400 in operation S2025.

The server 400 may process the third speech with respect to the third text based on the third audio data received from the electronic device 100 in operation S2026.

The server 400 may notify the electronic device 100 of completion of processing of the third speech in operation S2027.

The server 400 may store the third audio data and third voiceprint information on the third speech in operation S2028.

The electronic device 100 may complete the process of registering a voice ID in operation S2029.

As described above, according to at least one embodiment of the present disclosure, it is possible to register identification information on user voice in a user account.

Additionally, according to at least one embodiment of the present disclosure, it is possible to identify a user based on user voice.

Additionally, according to at least one embodiment of the present disclosure, it is possible to log in to an account of a user identified based on user voice.

Additionally, according to at least one embodiment of the present disclosure, it is possible to maintain the continuity of identification information on a user who have previously attempted registration in a process of registering identification information on user voice to a user account.

Referring to FIG. 1 to FIG. 20, the electronic device 100 according to one aspect of the present disclosure includes the display 180, the external device interface 130 configured to communicate with remote control device 200, the network interface 135 configured to communicate with the server 400, the user input interface 150 configured to transmit a signal related to a user input, and the controller 170, wherein the controller 170 is configured to display a preset text related to registration of identification information through the display 180 while performing a process of registering the identification information related to speech for a user account logged in to the server 400, upon receiving a speech signal related to the preset text through the user input interface 150, transmit data including the speech signal to the server 400, complete the process of registering the identification information based on processing of the speech signal related to the preset text by the server 400, and interrupt the process of registering the identification information upon receiving a predetermined input related to speech recognition from the remote control device 200 during the process of registering the identification information.

Additionally, according to one aspect of the present disclosure, the identification information may include a feature vector with respect to a voiceprint of the speech.

Additionally, according to one aspect of the present disclosure, the controller 170 may transmit, to the server 400, data including a speech signal related to the predetermined input and received from the remote control device 200 after receiving the predetermined input, and perform an operation related to the predetermined input based on processing of the speech signal related to the predetermined input by the server 400.

Additionally, according to one aspect of the present disclosure, the controller 170 may determine whether the identification information has been temporarily stored in the server 400 upon starting the process of registering the identification information for the user account, display a predetermined number of pieces of text in stages based on the identification information having not been temporarily stored in the server 400, and display some of the plurality of pieces of text in stages excluding text related to the identification information temporarily stored in the server 400 based on the identification information having been temporarily stored in the server 400.

Additionally, according to one aspect of the present disclosure, the controller 170 may display a notification regarding interruption of the process of registering the identification information through the display 180 based on termination of the operation related to the predetermined input, and determine whether to start the process of registering the identification information based on the user input received through the user input interface 150.

The server 400 according to one aspect of the present disclosure includes the communication part 480 configured to communicate with the electronic device 100, the database 490; and the controller 470, wherein the controller 470 is configured to convert a speech signal included in data received from the electronic device 100 into text while performing a process of registering identification information related to speech for a user account logged in to the server 400, generate identification information related to the speech signal based on the converted text being related to preset text related to registration of the identification information, map the generated identification information to user identification information related to the user account and store the mapped information in the database 490, and maintain or delete the identification information mapped to the user identification information upon receiving a notification regarding interruption of the process of registering the identification information from the electronic device 100 during the process of registering the identification information.

Additionally, according to one aspect of the present disclosure, the identification information may include a feature vector with respect to a voiceprint of the speech.

Additionally, according to one aspect of the present disclosure, the controller 470 may maintain the identification information mapped to the user identification information based on a number of pieces of identification information mapped to the user identification information being equal to or greater than a preset minimum number, and delete the identification information mapped to the user identification information based on the number of pieces of identification information mapped to the user identification information being less than the preset minimum number.

Additionally, according to one aspect of the present disclosure, the controller 470 may determine whether the identification information is mapped to the user identification information based on the process of registering the identification information being started for the user account, transmit a predetermined number of pieces of text to the electronic device 100 in stages based on the identification information not being mapped to the user identification information, and transmit some of the plurality of pieces of text excluding text related to the identification information mapped to the user identification information to the electronic device 100 in stages based on the identification information being mapped to the user identification information.

Additionally, according to one aspect of the present disclosure, the controller 470 may determine whether the identification information is mapped to the user identification information based on the process of registering the identification information being started for the user account, transmit first text excluding the text related to the identification information mapped to the user identification information among the plurality of pieces of text to the electronic device 100 based on the identification information being mapped to the user identification information, generate identification information on a first speech signal related to the first text and included in data received from the electronic device 100, maintain the identification information mapped to the user identification information based on the identification information on the first speech signal being related to at least one piece of the identification information mapped to the user identification information, and delete the identification information mapped to the user identification information based on the identification information on the first speech signal not being related to at least one piece of the identification information mapped to the user identification information.

Additionally, according to one aspect of the present disclosure, the controller 470 may map the identification information on the first speech signal to the user identification information and store the mapped information in the database 490.

Additionally, according to one aspect of the present disclosure, the controller 470 may transmit, to the electronic device 100, a result of determining that a current user is the same as a previous user based on the identification information on the first speech signal being related to at least one piece of the identification information mapped to the user identification information, and transmit, to the electronic device 100, a result of determining that the current user is different from the previous user based on the identification information on the first speech signal not being related to at least one piece of the identification information mapped to the user identification information.

Additionally, according to one aspect of the present disclosure, the controller 470 may map the speech signal to the user identification information and store the mapped signal in the database 490 based on the converted text and the preset text being related to each other.

Additionally, according to one aspect of the present disclosure, the controller 470 may generate identification information related to the speech signal mapped to the user identification information using a first algorithm, and change the identification information mapped to the user identification information and generated using a second algorithm to the identification information generated using the first algorithm.

The system 10 according to one aspect of the present disclosure includes the electronic device 100 and the server 400, wherein the electronic device 100 is configured to display a preset text related to registration of identification information while performing a process of registering the identification information related to speech for a user account logged in to the server 400, upon receiving a speech signal related to the preset text, transmit data including the speech signal to the server 400, complete the process of registering the identification information based on processing of the speech signal related to the preset text by the server 400, and stop the process of registering the identification information upon receiving a predetermined input related to speech recognition from the remote control device 200 during the process of registering the identification information, and the server 400 is configured to convert the speech signal included in the data received from the electronic device 100 into text, generate identification information related to the speech signal based on the converted text and the preset text being related to each other, map the generated identification information to user identification information related to the user account and store the mapped information in a database 490, and maintain or delete the identification information mapped to the user identification information upon receiving a notification regarding interruption of the process of registering the identification information from the electronic device 100 during the process of registering the identification information.

The accompanying drawings are provided merely to facilitate understanding of the embodiments disclosed in the present specification, and the technical idea disclosed in the present specification is not limited by the accompanying drawings. It should be understood that the present disclosure includes all modifications, equivalents, and substitutions falling within the idea and technical scope of the present disclosure.

Meanwhile, an operating method according to the present disclosure may be implemented as processor-readable code recorded on a processor-readable recording medium. The processor-readable recording medium may include any type of recording device in which data readable by a processor is stored. Examples of the processor-readable recording medium include a read-only memory (ROM), a random-access memory (RAM), a compact disc read-only memory (CD-ROM), a magnetic tape, a floppy disk, an optical data storage device, and the like, and may also include a medium implemented in the form of a carrier wave, such as transmission via the Internet. In addition, the processor-readable recording medium may be distributed over computer systems connected through a network such that the processor-readable code is stored and executed in a distributed manner.

Although preferred embodiments of the present disclosure have been illustrated and described above, the present disclosure is not limited to the particular embodiments described above. Various modifications may be made by those of ordinary skill in the art without departing from the gist of the present disclosure as claimed in the appended claims, and such modifications should not be understood separately from the technical idea or scope of the present disclosure.

## Claims

1. An electronic device comprising:
a display;
an external device interface configured to communicate with a remote control device;
a network interface configured to communicate with a server;
a user input interface configured to transmit a signal related to a user input; and
a controller,
wherein the controller is configured to:
display a preset text related to registration of identification information through the display while performing a process of registering the identification information related to speech for a user account logged in to the server;
upon receiving a speech signal related to the preset text through the user input interface, transmit data including the speech signal to the server;
complete the process of registering the identification information based on processing of the speech signal related to the preset text by the server; and
interrupt the process of registering the identification information upon receiving a predetermined input related to speech recognition from the remote control device during the process of registering the identification information.

2. The electronic device of claim 1, wherein the identification information includes a feature vector with respect to a voiceprint of the speech.

3. The electronic device of claim 1, wherein the controller is configured to:
transmit, to the server, data including a speech signal related to the predetermined input and received from the remote control device after receiving the predetermined input, and
perform an operation related to the predetermined input based on processing of the speech signal related to the predetermined input by the server.

4. The electronic device of claim 1, wherein the controller is configured to:
determine whether the identification information has been temporarily stored in the server upon starting the process of registering the identification information for the user account,
display a predetermined number of pieces of text in stages based on the identification information having not been temporarily stored in the server, and
display some of the plurality of pieces of text in stages excluding text related to the identification information temporarily stored in the server based on the identification information having been temporarily stored in the server.

5. The electronic device of claim 1, wherein the controller is configured to:
display a notification regarding interruption of the process of registering the identification information through the display based on termination of the operation related to the predetermined input, and
determine whether to start the process of registering the identification information based on the user input received through the user input interface.

6. A server comprising:
a communication part configured to communicate with an electronic device;
a database; and
a controller,
wherein the controller is configured to:
convert a speech signal included in data received from the electronic device into text while performing a process of registering identification information related to speech for a user account logged in to the server;
generate identification information related to the speech signal based on the converted text being related to preset text related to registration of the identification information;
map the generated identification information to user identification information related to the user account and store the mapped information in the database; and
maintain or delete the identification information mapped to the user identification information upon receiving a notification regarding interruption of the process of registering the identification information from the electronic device during the process of registering the identification information.

7. The server of claim 6, wherein the identification information includes a feature vector with respect to a voiceprint of the speech.

8. The server of claim 6, wherein the controller is configured to:
maintain the identification information mapped to the user identification information based on a number of pieces of identification information mapped to the user identification information being equal to or greater than a preset minimum number, and
delete the identification information mapped to the user identification information based on the number of pieces of identification information mapped to the user identification information being less than the preset minimum number.

9. The server of claim 6, wherein the controller is configured to:
determine whether the identification information is mapped to the user identification information based on the process of registering the identification information being started for the user account,
transmit a predetermined number of pieces of text to the electronic device in stages based on the identification information not being mapped to the user identification information, and
transmit some of the plurality of pieces of text excluding text related to the identification information mapped to the user identification information to the electronic device in stages based on the identification information being mapped to the user identification information.

10. The server of claim 6, wherein the controller is configured to:
determine whether the identification information is mapped to the user identification information based on the process of registering the identification information being started for the user account,
transmit first text excluding the text related to the identification information mapped to the user identification information among the plurality of pieces of text to the electronic device based on the identification information being mapped to the user identification information, generates identification information on a first speech signal related to the first text and included in data received from the electronic device,
maintain the identification information mapped to the user identification information based on the identification information on the first speech signal being related to at least one piece of the identification information mapped to the user identification information, and
delete the identification information mapped to the user identification information based on the identification information on the first speech signal not being related to at least one piece of the identification information mapped to the user identification information.

11. The server of claim 10, wherein the controller is configured to map the identification information on the first speech signal to the user identification information and stores the mapped information in the database.

12. The server of claim 10, wherein the controller is configured to:
transmit, to the electronic device, a result of determining that a current user is the same as a previous user based on the identification information on the first speech signal being related to at least one piece of the identification information mapped to the user identification information, and
transmit, to the electronic device, a result of determining that the current user is different from the previous user based on the identification information on the first speech signal not being related to at least one piece of the identification information mapped to the user identification information.

13. The server of claim 6, wherein the controller is configured to map the speech signal to the user identification information and stores the mapped signal in the database based on the converted text and the preset text being related to each other.

14. The server of claim 13, wherein the controller is configured to:
generate identification information related to the speech signal mapped to the user identification information using a first algorithm, and
change the identification information mapped to the user identification information and generated using a second algorithm to the identification information generated using the first algorithm.

15. A system comprising:
an electronic device; and
a server,
wherein the electronic device is configured to:
display a preset text related to registration of identification information while performing a process of registering the identification information related to speech for a user account logged in to the server;
upon receiving a speech signal related to the preset text, transmit data including the speech signal to the server;
complete the process of registering the identification information based on processing of the speech signal related to the preset text by the server; and
stop the process of registering the identification information upon receiving a predetermined input related to speech recognition from a remote control device during the process of registering the identification information, and
wherein the server is configured to:
convert the speech signal included in the data received from the electronic device into text;
generate identification information related to the speech signal based on the converted text and the preset text being related to each other;
map the generated identification information to user identification information related to the user account and store the mapped information in a database; and
maintain or delete the identification information mapped to the user identification information upon receiving a notification regarding interruption of the process of registering the identification information from the electronic device during the process of registering the identification information.
